# EUROPÄISCHE PATENTSCHRIFT

(11) **EP 3 718 184 B1**
(45) Veröffentlichungstag und Bekanntmachung des Hinweises auf die Patenterteilung: **15.05.2024**
(21) Anmeldenummer: 18800106.9
(22) Anmeldetag: 07.11.2018
(51) Int. Cl.: H02G 1/12

(54) **KLEMMBACKEN FÜR EINE ABISOLIERZANGE, SOWIE ABISOLIERZANGE**
GRIPPING JAWS FOR STRIPPING PLIERS AND STRIPPING PLIERS
MÂCHOIRES DE SERRAGE POUR UNE PINCE À DÉNUDER ET PINCE À DÉNUDER

(30) Priorität: 29.11.2017 DE 102017128227
(43) Veröffentlichungstag der Anmeldung: 07.10.2020
(73) Patentinhaber: Rennsteig Werkzeuge GmbH, 98587 Steinbach-Hallenberg (DE)
(72) Erfinder: HOLLAND-MORITZ, Georg, 98587 Steinbach-Hallenberg (DE); BRÜCKNER, Michael, 98587 Steinbach-Hallenberg (DE); LEGLER, Ralf, 98587 Altersbach (DE)
(74) Vertreter: Müller, Enno
(86) Internationale Anmeldenummer: PCT/EP2018/080468
(87) Internationale Veröffentlichungsnummer: WO 2019/105702

(56) Entgegenhaltungen:
- EP-A1- 0 989 652
- EP-A2- 1 557 920
- WO-A2-2008/062375
- DE-A1- 3 308 053
- DE-A1- 10 006 509
- JP-A- 2008 167 813
- US-A- 4 485 696
- US-A- 4 577 405

## Beschreibung

### Gebiet der Technik

Die Erfindung betrifft zunächst Klemmbacken für eine Abisolierzange nach den Merkmalen des Oberbegriffes des Anspruches 1.

Weiter betrifft die Erfindung eine Abisolierzange gemäß den Merkmalen des Oberbegriffes des Anspruches 5.

### Stand der Technik

Abisolierzangen der in Rede stehenden Art sind bekannt. Es wird beispielsweise auf die EP 1557 920 B1 (US 7,513,177 B2) oder auf die DE 44 20 006 C2 verwiesen. Diese Abisolierzangen dienen zum Abisolieren von elektrischen Kabeln. Hierzu wird das Kabel zufolge eines Zusammendrückens der zangenartig wirkenden Griffteile zwischen den äußeren Klemmbacken eingeklemmt, wobei im Zuge des weiteren Zusammendrückens der Griffteile die Schneiden in den Isoliermantel des Kabels einschneiden und diesen bevorzugt im Zuge einer weiteren Betätigung der Griffteile von dem freizulegenden Leiter abziehen.

Aus der WO 2008/062375 A2 ist eine stationäre Abisoliermaschine bekannt, bei der die Klemmbacken Rippen aufweisen, die in Abhängigkeit einer Dicke des zu greifenden Kabels in die Ausnehmungen der gegenüberliegenden Klemmbacke einfahren können. Aus der EP 0 989 652 A1 ist eine Abisolierungszange bekannt, bei der auch Klemmbacken mit quer zur Erstreckung des zu greifenden Kabels verlaufenden Rippen ausgebildet sind. Aus der EP 1 557 920 A2 ist vergleichbar auch eine Abisolierungszange bekannt mit Klemmbacken, die entsprechend verlaufende Rippen aufweisen.

Hinsichtlich der Schneiden ist aus der JP 2008/167813 A eine Ausgestaltung bekannt, bei der die Schneiden jeweils nur einen V-förmigen Verlauf aufweisen. Vergleichbare Ausgestaltungen sind auch aus der DE 100 06 509 A1 und der US 4 577 405 A bekannt. Bezüglich der Ausgestaltung der beiden letztgenannten Druckschriften ist seitlich anschließend an die Schneiden ein gerade verlaufender Bereich mit stumpfer Flachkante ausgebildet.

### Zusammenfassung der Erfindung

Ausgehend von dem dargelegten Stand der Technik beschäftigt sich die Erfindung mit der Aufgabenstellung, Klemmbacken und Schneiden und darüber hinaus auch eine solche Klemmbacken und Schneiden aufweisende Abisolierzange anzugeben, die vorteilhaft ausgestaltet sind.

Diese Aufgabe ist zunächst hinsichtlich der Klemmbacken beim Gegenstand des Anspruches 1 gelöst, wobei darauf abgestellt ist, dass der Ausnehmungsboden über eine Länge einer Ausnehmung unterschiedlich tief ausgebildet ist, wobei der Ausnehmungsboden im Bereich der Ausbuchtung eine geringste Tiefe aufweist und dass der Ausnehmungsboden bezogen auf einen Längsquerschnitt der Ausnehmung im Bereich der Ausbuchtung eine kuppelartige Erhöhung aufweist, die gegensinnig gekrümmt zu einer im Querschnitt betrachtet zugeordneten Randkante der Ausbuchtung ist, mit einer Höhe über einem Niveau des sich an die Erhöhung anschließenden Bereichs des Ausnehmungsbodens, welche Höhe einem Drittel bis einem Fünftel einer größten Tiefe der Ausnehmung entspricht.

Hierdurch ist nur erreicht, dass in Abhängigkeit auch von der Dicke des zu klemmenden Teils ein Formschluss der gegenüberliegenden Klemmbacken jedenfalls am Ende des Zusammenfahrens gegeben ist, sondern ist zugleich auch eine günstige Einwirkung sowohl auf Kabel großen wie auch kleinen Durchmessers erreicht.

Alle Rippen beider im Einbauzustand gegenüberliegenden Klemmbacken weisen auf einem Teil ihrer Längserstreckung eine konkave Ausbuchtung auf.

Eine solche Ausbuchtung in beiden Klemmbacken erweist sich insbesondere bei der Klemmung von Kabeln mit vergleichsweise kleinen Querschnitten von Vorteil. Das Kabel erfährt in der Ausbuchtung der Rippe eine an ihre Längserstreckung orientierte Aufnahme.

Hinsichtlich der Abisolierzange ist die Aufgabe beim Gegenstand des Anspruches 5 gelöst, wobei darauf abgestellt ist, dass die Abisolierzange Klemmbacken gemäß einem der Ansprüche 1 bis 4 aufweist.

Die Abisolierzange kann Schneiden aufweisen. Die Schneiden können an ihrem freien, in einer Schneidenspitze mit einem im Querschnitt spitzen Winkel auslaufenden Enden eine Konturlinie aufweisen, die bezogen auf eine Seitenansicht, in der die Konturlinie die Abschlusslinie der Schneide bildet, eine Einsenkung aufweist, wobei die Konturlinie an einer einteilig ausgebildeten Schneide gegeben ist und die Einsenkung in der Seitenansicht als stetig gekrümmte Linie mit einem gegebenenfalls ersten Radius erscheint.

An die Einsenkung kann sich ein - oder beidseitig unter Fortsetzung der Umschließung eines eingelegten Kabels eine Konturlinie anschließen, die - bezogen auf eine Schneidrichtung einer Schneidebene - sich in Richtung der Schneidrichtung fortsetzt und eine gegenüber der ersten Krümmung geringere Krümmung aufweist.

An diese Krümmung kann sich beidseitig unmittelbar ein gerader Abschnitt der Konturlinie anschließen, beide gerade verlaufenden Abschnitte entsprechend in einer gemeinsamen Gerade verlaufen und mit der Einsenkung die Konturlinie der Schneide insgesamt bilden.

Zufolge dieser Ausgestaltung ist eine Abisolierzange angegeben, die in vorteilhafter Weise zum Klemmen und darüber hinaus zum Einschneiden des Isoliermantels von Kabeln unterschiedlicher Durchmesser geeignet ist. Durch die vorgeschlagene Schneidengeometrie ist über den üblichen Nutzungsbereich bezüglich der Kabeldurchmesser ein ausreichender Einschnitt in den Isoliermantel in Umfangsrichtung des Kabels erreichbar, so dass ein anschließendes Abziehen des abzutrennenden Abschnitts des Isoliermantels unter gegebenenfalls Abreißen eines nicht eingeschnittenen, geringen Umfangabschnittes sicher und bezüglich der Durchführung leicht erreichbar ist.

Es ist über die Einsenkung hinaus, von dieser aus betrachtet, eine weitere Erstreckung der Konturlinie in einer umfassenden Weise zu einem eingelegten Kabel geschaffen. Die Konturlinie erstreckt sich auch in bzw. entlang der Schneidebene, also mit einer erweiternden Ausdehnung in Querrichtung unter Bezug auf ein eingelegtes Kabel.

Gemäß einer bevorzugten Ausführungsform kann eine Ausbuchtung einer klemmbackenseitigen Rippe bezogen auf eine Länge der Rippe mittig ausgebildet sein. Bevorzugt sind alle Ausbuchtungen einer Klemmbacke jeweils mittig ausgebildet.

Darüber hinaus kann eine Ausbuchtung tiefenmäßig den jeweils zugeordneten Ausnehmungsboden nicht erreichen. Entsprechend ist der tiefste Bereich der Ausbuchtung in Richtung einer quer zur Längserstreckung der Rippe betrachteten Höhenerstreckung der Rippe beabstandet.

Auch muss der Ausnehmungsboden über eine Länge der Ausnehmung unterschiedlich tief ausgebildet sein. Dies kann durch eine zumindest partiell nicht ebenenparallele oder eine stufenartige Ausgestaltung des Ausnehmungsbodens zu der durch die Rippenstirnflächen aufgespannten Klemmfläche gegeben sein.

Auch muss der Ausnehmungsboden im Bereich der Ausbuchtung eine geringste Tiefe aufweisen. Die Tiefe ist hierbei bevorzugt gemessen senkrecht zur Längserstreckung eine Rippe, ausgehend von einer oberen freien Stirnfläche der Rippe, die mit den Stirnflächen der weiteren Rippen die ebene Klemmfläche aufspannen. So muss weiter der Ausnehmungsboden eine Erhebung aufweisen, die sich in einer bevorzugten Ausgestaltung im Bereich der Ausbuchtung der den Ausnehmungsboden begrenzenden Rippen erstrecken kann.

Gemäß der Erfindung muss hierzu der Ausnehmungsboden bezogen auf einen Querschnitt der Ausnehmung im Bereich der Ausbuchtung quer zu einer Längsrichtung einer Rippe bzw. Ausnehmung eine kuppelartige Erhöhung aufweisen. Mit Bezug auf einen solchen Längsquerschnitt kann eine Begrenzungslinie einer solchen Erhöhung einer Kreislinie folgen, gegebenenfalls mit einem durchgehend gleichbleibenden Radius, gegebenenfalls aber auch mit über die Erstreckung unterschiedlichen Radien.

So muss weiter die kuppelartige Erhöhung bezüglich der in dem Querschnitt betrachteten Randkante gegenläufig gekrümmt gerichtet sein zu der zugeordneten Randkante der Ausbuchtung, welche ebenfalls einer Kreislinie folgen kann, weiter gegebenenfalls ebenfalls mit einem gleichbleibenden oder sich über die Erstreckungslänge verändernden Radius.

Eine größte Tiefe der Ausnehmung kann einem Drittel bis fünf Drittel des freien Abstandes zwischen zwei Rippen im Bereich ihrer Rippenoberfläche entsprechen. Der Abstand zweier Rippen zueinander definiert auch die Breite der Ausnehmung im Bereich der oberen Rippenenden, gegebenenfalls vor Beginn der kuppelartigen Erhöhungen oder von oben betrachtet unmittelbar anschließend an die gegebenenfalls vorgesehenen kuppelartigen Erhöhungen.

Zur Festlegung einer Klemmbacke an der Abisolierzange ist der Befestigungsfortsatz vorgesehen. Dieser erstreckt sich von einem Grundkörper der Klemmbacke ausgehend entgegengerichtet zu dem ebenfalls von dem Grundkörper abragenden Rippen. Der Befestigungsfortsatz kann plattenartig gebildet sein, mit einer sich in Erstreckungsrichtung einer Rippe erstreckenden Plattenebene. Hierbei kann sich der Befestigungsfortsatz in Erstreckungsrichtung einer Rippe etwa über die halbe Erstreckungslänge bis hin zu beispielsweise vier Fünftel der Erstreckungslänge einer Rippe erstrecken. Auch kann die diesbezügliche Länge des Befestigungsfortsatzes der Länge einer Rippe im Wesentlichen entsprechen, gegebenenfalls sogar diese übertreffen. Quer zu dieser Erstreckungslänge betrachtet kann der Befestigungsfortsatz eine Dicke aufweisen, die dem 1- bis 3-Fachen, gegebenenfalls bis hin zu einem 5-Fachen der in selber Richtung betrachteten Dicke einer Rippe entsprechen kann. Es ergibt sich so in bevorzugter Ausgestaltung ein schwertartiger Befestigungsfortsatz.

Zudem kann der Befestigungsfortsatz ein Langloch aufweisen, mit einer größten Länge senkrecht zu der Erstreckungsrichtung einer Rippe. Das Langloch ist von einer Befestigungsschraube durchsetzt, zur Schraubbefestigung der Klemmbacke von einer Stirnfläche einer Zangenbacke aus. Das Langloch belässt beispielsweise zum Ausgleich von Toleranzen einen Spielraum hinsichtlich des Durchgriffs der Schraube. Die Schraubbefestigung von einer Stirnfläche einer Zangenbacke aus erweist sich als handhabungstechnisch günstig.

In einer möglichen Ausgestaltung ist eine Herstellung der Klemmbacke im Sinterverfahren vorgesehen.

Bezüglich der Schneidenkontur kann die geringere Krümmung einer Kreislinie mit einem gegebenenfalls zweiten Radius folgen, weiter entsprechend mit einem gegenüber dem gegebenenfalls ersten Radius größeren Radiusmaß, beispielsweise etwa dem 5- bis 20-Fachen, darüber hinaus gegebenenfalls bis hin zu einem 50-Fachen oder mehr des Maßes des ersten Radius.

Auch kann sich, wie zudem bevorzugt, an die erste Krümmung ein- oder beidseitig ein gerade verlaufender Abschnitt der Konturlinie anschließen. So kann sich beispielsweise ein im Wesentlichen beispielsweise V-förmiger Verlauf der Schneidkonturlinie im Bereich der Einsenkung ergeben, wobei die V-Spitze der Einsenkung durch eine stetig gekrümmte Linie mit einem gegebenenfalls ersten Radius gebildet ist.

Die mit dem ersten Radius verrundete V-Spitze bietet eine günstige Umfassung durchmesserkleiner Kabel durch die Schneide, so dass gegebenenfalls ein in Umfangsrichtung weitestgehend oder vollständig umlaufender Einschnitt des Isolationsmantels erreichbar sein kann.

Darüber hinaus verlaufen die zwei äußeren in Bezug auf die Einsenkung gegenüberliegend gerade verlaufende Abschnitte entsprechend einer gemeinsamen Geraden. Diese weiteren gerade verlaufenden Abschnitte begrenzen die Einsenkung beidseitig und bilden mit der Einsenkung die Konturlinie der Schneide insgesamt.

### Kurze Beschreibung der Zeichnungen

Nachstehend ist die Erfindung anhand der beigefügten Zeichnung erläutert, die aber lediglich ein Ausführungsbeispiel darstellt. Auf der Zeichnung zeigt:
- Fig. 1: in perspektivischer Darstellung eine Abisolierzange;
- Fig. 2: in perspektivischer Einzeldarstellung ein Schneidbackenpaar;
- Fig. 3: das Schneidbackenpaar in Seitenansicht;
- Fig. 4: eine weitere perspektivische Darstellung des Schneidbackenpaares;
- Fig. 5: den Schnitt gemäß der Linie V-V in Figur 4;
- Fig. 6: eine Längsschnittdarstellung durch die Abisolierzange, eine unbetätigte Grundstellung betreffend;
- Fig. 7: eine der Figur 6 entsprechende Darstellung, jedoch eine Zwischenstellung im Zuge der Betätigung betreffend;
- Fig. 8: eine Folgedarstellung zu Figur 7 im Zuge der weiteren Betätigung der Abisolierzange;
- Fig. 9: eine Folgedarstellung zu Figur 8, die Betätigungsendstellung betreffend;
- Fig. 10: eine im Wesentlichen der Figur 7 entsprechende Längsschnittdarstellung der Abisolierzange, betreffend eine Entriegelungsstellung einer Zugstange zur Ermöglichung eines Wechsels des Schneidbackenpaares;
- Fig. 11: die Herausvergrößerung des Bereiches XI in Figur 6;
- Fig. 12: den in Figur 11 dargestellten Bereich in partiell geschnittener Perspektivdarstellung;
- Fig. 13: eine weitere perspektivische Explosionsdarstellung des in den Figuren 11 und 12 dargestellten Bereichs;
- Fig. 14: eine Klemmbacke der Abisolierzange in Stirnansicht;
- Fig. 15: die Klemmbacke in einer weiteren Ansicht;
- Fig. 16: die Klemmbacke in Seitenansicht;
- Fig. 17: die Herausvergrößerung des Bereiches XVII in Figur 16;
- Fig. 18: die Draufsicht auf die Klemmbacke gemäß Pfeil XVIII in Figur 14;
- Fig. 19: den Schnitt gemäß der Linie XIX-XIX in Figur 18;
- Fig. 20: den Schnitt gemäß der Linie XX-XX in Figur 18;
- Fig. 21: eine Schneide einer Schneidbacke in perspektivischer Einzeldarstellung;
- Fig. 22: den Schnitt gemäß der Linie XXII-XXII in Figur 21 durch die Schneide;
- Fig. 23: die Schneide in einer vergrößerten Seitenansicht;
- Fig. 24: eine vergrößerte schematische Schnittdarstellung der Anordnung beider Schneiden des Schneidbackenpaares;
- Fig. 25: eine perspektivische Darstellung des Zangenmaulbereichs bei zwischen die Klemmbacken eingelegtem, abzuisolierenden Kabel;
- Fig. 26: eine teilweise explosionsperspektivische Darstellung des Bereiches XXVI in Figur 1;
- Fig. 27: in explosionsperspektivischer Darstellung die Zangenbacken der Abisolierzange, sowie Mittel zur Einstellung einer Schnitttiefe der Schneidbacken;
- Fig. 28: eine weitere perspektivische Darstellung gemäß Figur 27;
- Fig. 29: in perspektivischer Darstellung die Verstellmittel-Anordnung zur Einstellung einer Schnitttiefe der Schneidbacken;
- Fig. 30: die Verstellmittel-Anordnung in Seitenansicht;
- Fig. 31: in einer Seitenansicht ein Exzenterteil der VerstellmittelAnordnung mit einem ersten und einem zweiten Exzenter;
- Fig. 32: die Anordnung gemäß Figur 31 in perspektivischer Darstellung;
- Fig. 33: den Schnitt gemäß der Linie XXXIII-XXXIII in Figur 31 durch den Bereich des ersten Exzenters;
- Fig. 34: den Schnitt gemäß der Linie XXXIV-XXXIV in Figur 31 durch den Bereich des zweiten Exzenters;
- Fig. 35: eine schematische Schnittdarstellung des Bereiches XXXV in Figur 7;
- Fig. 36: eine der Figur 35 entsprechende Darstellung, jedoch nach einer manuellen Schnitttiefen-Verstellung über die VerstellmittelAnordnung.

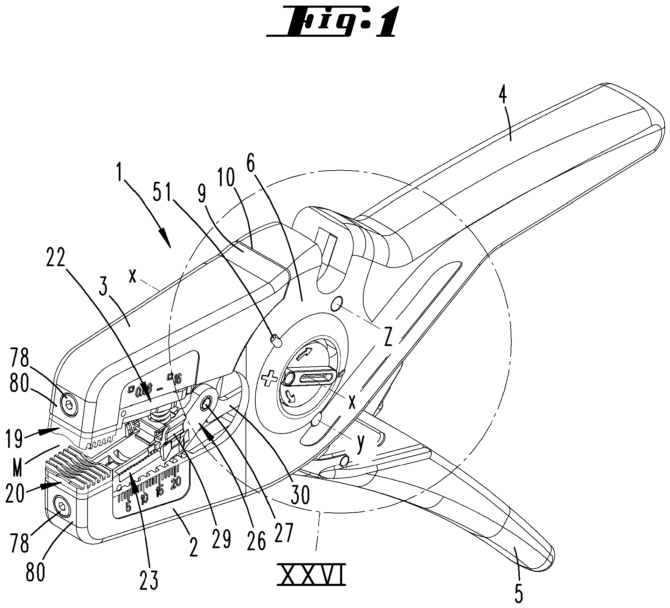

Dargestellt und beschrieben ist, zunächst mit Bezug zu Figur 1, eine Abisolierzange 1 mit zwei Zangenbacken 2, 3 und zwei Griffteilen 4, 5. Die Zangenbacken 2 und 3 begrenzen ein Zangenmaul M.

Die Zangenbacke 2, die nachstehend als feststehend bezeichnet ist, ist über einen Wangenbereich 6 unmittelbar und fest mit dem Griffteil 4 verbunden.

Im Wangenbereich 6 bietet die Abisolierzange 1 eine Lagerung für eine Drehachse 7 mit einer geometrischen Achse x an, um welche die weiter nachstehend bewegliche Zangenbacke 3 drehbar gehaltert ist.

Die Lagerung der beweglichen Zangenbacke 3 an der Drehachse 7 ergibt sich im Bereich eines in Erstreckungsrichtung der Achse x in Projektion zu dem Wangenbereich 6 der feststehenden Zangenbacke 3 sich erstreckenden Schulterbereiches 8 der beweglichen Zangenbacke 3.

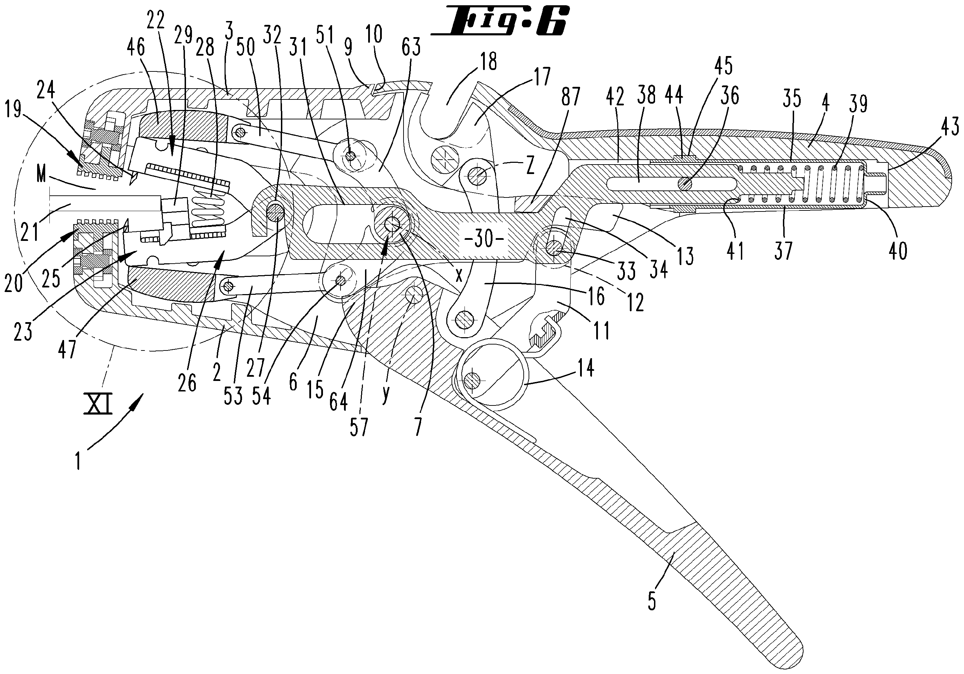

Die Zangenmaul-Offenstellung, beispielsweise gemäß der Darstellung in Figur 6, ist anschlagbegrenzt, zufolge Abstützung eines Vorsprungbereiches 9 an der beweglichen Zangenbacke 3 an einer zugeordneten Abstützfläche 10 der feststehenden Zangenbacke 2.

Das weitere Griffteil 5 ist um eine weitere, parallel zur Drehachse 7 beziehungsweise deren geometrischen Achse x ausgerichtete geometrische Achse y schwenkgelagert. Die diesbezügliche körperliche Achse ist gleichfalls in dem Wangenbereich 6 der feststehenden Zangenbacke 2 beziehungsweise des feststehenden Griffteils 4 gehaltert.

Das bewegliche Griffteil 5 ist um die Achse y in Richtung auf das feststehende Griffteil 4 schwenkbar, wobei eine Schwenkverlagerung des beweglichen Griffteils 5 in Richtung auf das feststehende Griffteil 4 eine gekoppelte Drehbewegung der beweglichen Zangenbacke 3 um die Achse x bewirkt.

Hierzu ist an dem beweglichen Griffteil 5 ein bevorzugt abgewinkelt verlaufender Steuerhebel 11 befestigt, der mit seinem freien Ende, in dem dargestellten Ausführungsbeispiel mit einer in diesem Bereich bevorzugt angeordneten Rolle 12, auf einen bspw. kulissenartig ausgebildeten Ausleger 13 des Schulterbereiches 8 der beweglichen Zangenbacke 3 einwirkt.

Der Steuerhebel 11 ist an dem beweglichen Griffteil 5 schwenkbeweglich gehaltert. Die diesbezügliche Schwenkachse verläuft bevorzugt parallel zur geometrischen Drehachse x.

Zwischen dem Steuerhebel 11 und dem beweglichen Griffteil 5 wirkt eine Rückstellfeder 14 bevorzugt in Form einer Schenkelfeder. Diese belastet das bewegliche Griffteil 5 in Richtung auf die in Figur 6 dargestellte Grundstellung.

In dieser Grundstellung wirkt ein sich mit Bezug zu der geometrischen Achse y des beweglichen Griffteils 5 abgewandt zu dem Griffbereich erstreckender Vorsprungbereich 15 derart auf den Schulterbereich 8 der beweglichen Zangenbacke 3 ein, dass diese in ihre anschlagbegrenzte Grundstellung gedrängt und gehalten ist.

Darüber hinaus wirkt das bewegliche Griffteil 5 über einen Lenker 16 auf eine in den Wangenbereich 6 der feststehenden Zangenbacke 2 schwenkgelagerte Schneide 17 ein. Die Lagerung der Schneide 17 erfolgt im Wangenbereich 6, wobei die diesbezügliche geometrische Achse z ebenfalls parallel verläuft zu der geometrischen Drehachse x der beweglichen Zangenbacke 3.

Die Schneide 17 liegt in einem freigeschnittenen Bereich 18 der feststehenden Zangenbacke 3 beziehungsweise des Wangenbereiches 6 frei und dient bevorzugt zum Ablängen eines Kabels, beispielsweise eines in einem weiteren Schritt abzuisolierenden Kabels.

Durch die Schwenkbewegung der Schneide 17 im Zuge der Schwenkverlagerung des beweglichen Griffteils 5 in Richtung auf das feststehende Griffteil 4 wird ein gegebenenfalls in dem Bereich 18 einliegendes Kabel unter Abstützung des Kabels an den Flanken des Wangenbereiches 6, welche den Bereich 18 begrenzen, durch die verschwenkende Schneide 17 durchtrennt.

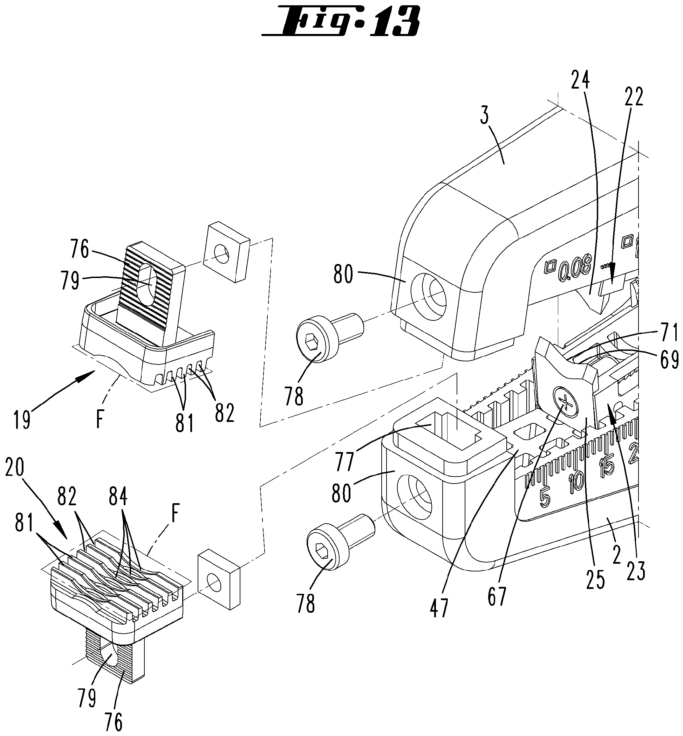

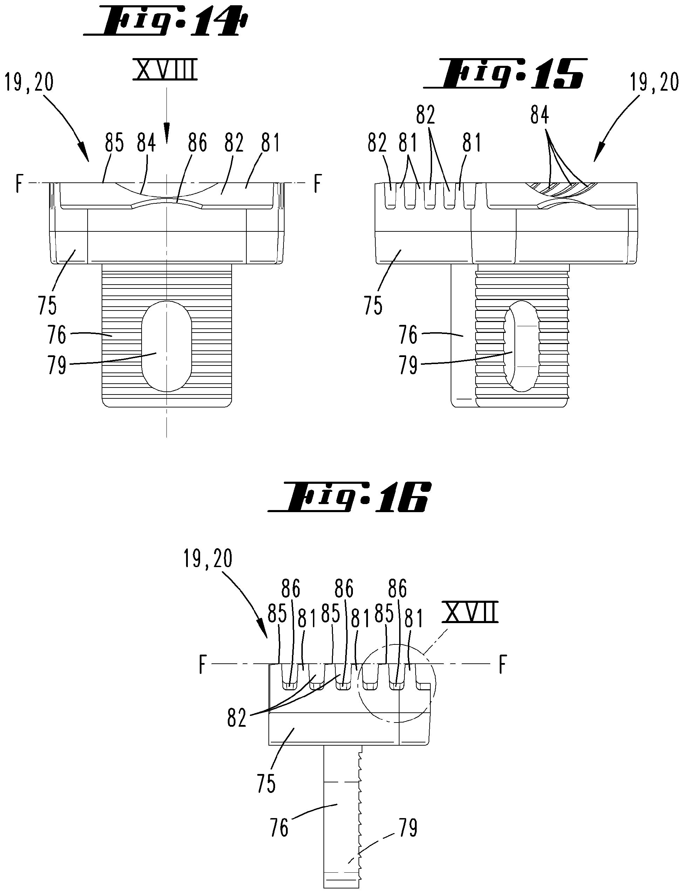

Die beiden Zangenbacken 2 und 3 weisen jeweils eine äußere Klemmbacke 19, 20 auf, zur klemmenden Erfassung eines zur Abisolierung eines freien Endes in das Zangenmaul M eingelegten Kabels 21, vergleiche auch Figuren 13 bis 16.

Darüber hinaus sind zwei, mit Bezug auf die Anordnung der Klemmbacken 19 und 20 relativ zu der geometrischen Drehachse x, innere Schneidbacken 22, 23 vorgesehen, jeweils in den Klemmbacken 19 und 20 zugewandten Endbereich festgelegten Schneiden 24, 25. Die Schneiden 24 und 25 sind aufeinander zuweisend angeordnet.

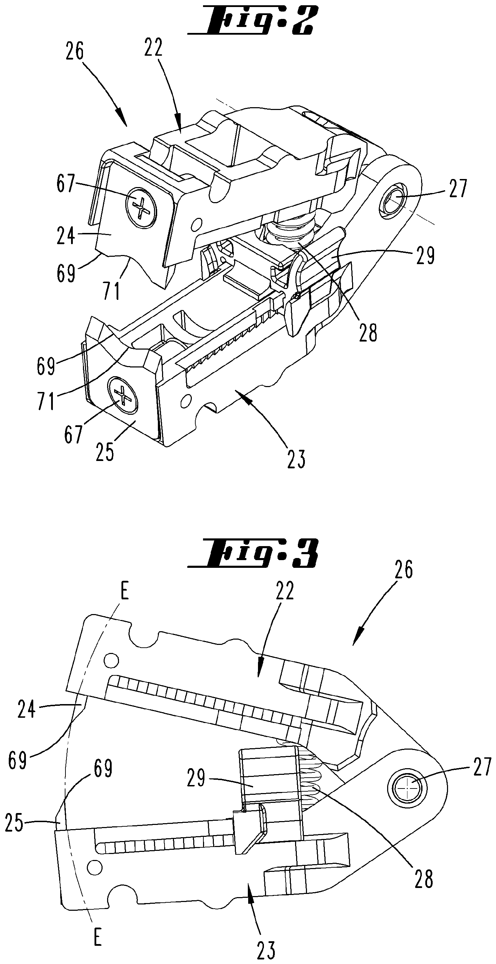

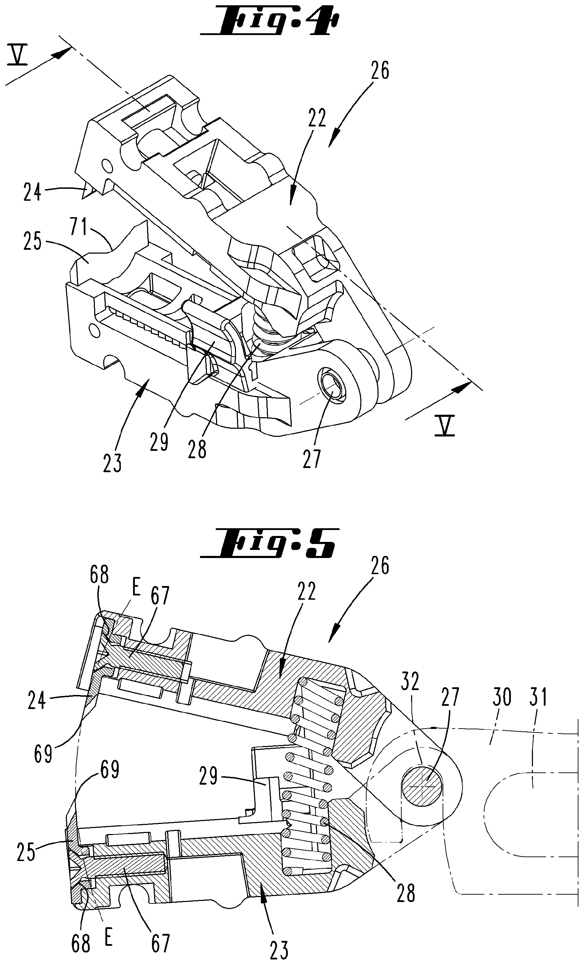

Die Schneidbacken 22 und 23, wozu in weiterer Einzelheit auch auf die Figuren 2 bis 5 verwiesen wird, sind zu einem Schneidbacken-Paar 26 zusammengefasst und im Bereich der den Schneiden 24 und 25 abgewandten Enden über eine Schwenkachse 27 miteinander verbunden, welche Schwenkachse 27 eine Relativverschwenkbarkeit der Schneidbacken 22 und 23 zueinander erlaubt.

Die geometrische Achse der Schwenkachse 27 erstreckt sich in betriebsbereiter Anordnung des Schneidbacken-Paares 26 bevorzugt in Parallelausrichtung zu der Drehachse x der beweglichen Zangenbacke 3.

Zwischen den Schneidbacken 22 und 23 ist eine Feder 28, in dem dargestellten Ausführungsbeispiel in Form einer Zylinder-Druckfeder, angeordnet, welche Feder 28 die Schneidbacken 22 und 23 in eine zueinander distanzierte Offenstellung belastet.

In dem dargestellten Ausführungsbeispiel ist an der unteren Schneidbacke 23, d.h. an der der feststehenden Zangenbacke 2 zugeordneten Schneidbacke 22 ein in Erstreckungsrichtung der Schneidbacke 22 rastfestlegbarer Anschlagschlitten 29 vorgesehen, zum Anbieten eines Anschlages für das freie, in das Zangenmaul M eingeführte Ende des Kabels 21, um hierüber die Länge des abzuisolierenden Bereiches zu definieren.

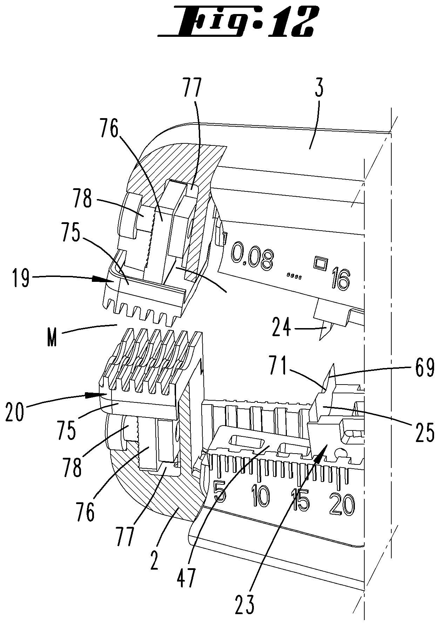

Die Schneidbacken 22 und 23 sind in der jeweils zugeordneten Zangenbacke 2, 3 seitlich geführt, vergleiche auch beispielsweise Figuren 12 und 13, zur Ermöglichung einer ordnungsgemäßen Schiebeverlagerung der Schneidbacken 22 und 23 in Richtung ihrer Längserstreckung, d.h. ausgehend von einer den Klemmbacken 19 und 20 zugeordneten Ausgangsstellung in Richtung einer zu den Klemmbacken 19 und 20 beabstandeten und in Richtung auf die Drehachse x verlagerten Endstellung und aus dieser Endstellung wieder zurück in die Ausgangsstellung.

Für diese Verlagerung der Schneidbacken 22, 23, bevorzugt des Schneidbacken-Paares 26 insgesamt, ist eine Zugstange 30 vorgesehen. Die Schneidbacken 22, 23 können im Zuge eines Zusammendrückens der Griffteile 4, 5 gegen die Kraft einer auf die Zugstange 30 wirkenden Feder 39 aus einer Ausgangsstellung in eine Endstellung verlagert werden. Die Zugstange 30 ist hierzu weiter bevorzugt von einer in einem bspw. Langloch 34 bewegbaren Zugachse 33 durchsetzt. Die Zugstange 30 weist darüber hinaus bevorzugt an ihrem griffseitigen Ende ein an der Zugstange 30 befestigtes Verschiebeteil auf. Das Verschiebeteil kann gegen die Kraft der Feder 39 relativ zu der Zugstange 30 verschiebbar sein, zur Befreiung der Zugstange 30 auf einer griffseitigen Lagerung.

Das Verschiebeteil kann insbesondere als eine Hülse 35 ausgebildet sein.

Wenn die Zugstange 30 auf der griffseitigen Lagerung befreit ist, kann die Zugstange 30 um die Zugachse 33 verschwenkbar sein. Durch eine entsprechende Verschwenkung werden die Schneidbacken 22, 23 von der Zugstange 30 frei gegeben.

Die Zugstange 30 ist auch unter Durchsetzung einer zugstangenseitigen, langlochartigen Ausnehmung 31 durch die körperliche Drehachse 7 geführt.

Zugeordnet der Schwenkachse 27 des Schneidbacken-Paares 26 weist die Zugstange 30 eine im Wesentlichen in Richtung auf die feststehende Zangenbacke 2, darüber hinaus im Wesentlichen in Schließ- beziehungsweise Öffnungsrichtung der Schneidbacken 22 und 23 gerichtete Einfahröffnung 32 auf. Diese ist geschaffen durch eine insgesamt hakenartige Ausgestaltung des diesbezüglichen Endbereiches der Zugstange 30.

In dieser Einfahröffnung 32 liegt in üblicher Nutzungsstellung der Abisolierzange 1 die Schwenkachse 27 des Schneidbacken-Paares 26 ein, so dass eine zufolge der langlochartigen Ausgestaltung der Ausnehmung 31 ermöglichte Schiebeverlagerung der Zugstange 30 zu einer entsprechenden Schiebeverlagerung des Schneidbacken-Paares 26 führt.

Diese Schiebeverlagerung der Zugstange 30 ist über eine Kopplung mit den am beweglichen Griffteil 5 gehalterten Steuerhebel 11 ermöglicht, welcher Steuerhebel 11 mit einer parallel zur Drehachse 7 ausgerichteten Zugachse 33, die in dem dargestellten Ausführungsbeispiel zugleich die Achse für die Rolle 12 bilden kann, in ein zugstangenseitiges Langloch 34 eingreift. Eine Mittellängslinie des Langloches 34 schließt zu einer Verlagerungsrichtung r der Zugstange 30 einen spitzen Winkel α von etwa 60 bis 85°, weiter beispielsweise etwa 75° ein.

Ein gegenüber dem insbesondere im Bereich der Drehachse 7 und der Zugachse 33 geführten Bereich abgekröpfter Abschnitt der Zugstange 30 verläuft in üblicher Nutzungsstellung der Abisolierzange 1 gegebenenfalls innerhalb des feststehenden Griffteiles 4, jedenfalls in Zuordnung zu diesem.

Im Bereich des griffseitigen Endes ist die Zugstange 30 von der genannten Hülse 35 umfasst. Diese ist bevorzugt unverlierbar an der Zugstange 30 gehaltert, dies unter Ermöglichung einer 8chiebeverlagerbarkeit der Hülse 35 relativ zu der Zugstange 30. Dies ist ermöglicht zufolge eines zapfenartigen Halterungsteils 36, das den Hülsenquerschnitt durchsetzt, unter jeweils endseitiger Festlegung des zapfenförmigen Halterungsteils 36 im Bereich der Hülsenwandung 37. Das zapfenförmige Halterungsteil 36 durchsetzt hierbei die in der Hülse 35 endbereichseitig aufgenommene Zugstange 30 im Bereich eines weiteren Langlochs 38.

Innerhalb der Hülse 35 ist die Feder 39 in Form einer Zylinder-Druckfeder angeordnet, die sich einerends am Boden 40 der Hülse 35 abstützt und anderenends an einer dem Boden 40 zugewandten Schulter 41 der Zugstange 30. Entsprechend ist eine Relativverlagerung von Zugstange 30 und Hülse 35 in Richtung der Hülsenlängsachse entgegen der Kraft der Feder 39 ermöglicht.

Die Hülse 35 ist zusammen mit dem zugeordneten Endbereich der Zugstange 30 in dem dargestellten Ausführungsbeispiel in einer griffinnenseitigen Höhlung 42 aufgenommen, wobei sich die Hülse 35 im betriebsbereiten Zustand der Abisolierzange 1 über eine über den Boden 40 hinausragende zapfenförmige Erweiterung an einem Höhlungsboden 43 abstützen kann.

Darüber hinaus weist die Hülse 35 einen Rastvorsprung 44 auf, zum Eingriff in eine an dem Griffteil 4, insbesondere im Bereich der Höhlung 42 ausgebildete Rastausnehmung 45.

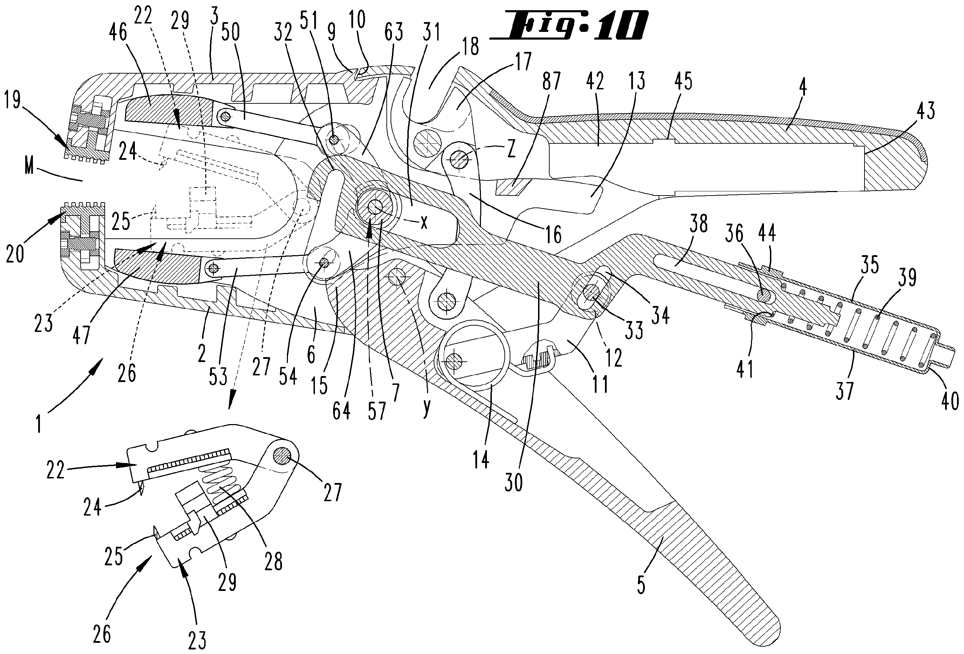

Die Zugstange 30 kann zufolge der vorbeschriebenen Anordnung und Ausgestaltung der abgefederten Hülse 35 aus der griffteilseitigen Lagerung befreit werden (vergleiche Figur 10). Hiernach kann, wie auch schon weiter oben ausgeführt, die Zugstange 30 um die Drehachse 7 geschwenkt werden, was zu dem auch durch die in dem Langloch 34 der Zugstange 30 geführte Zugachse 33 ermöglicht ist. Zufolge dieser Schwenkverlagerung der Zugstange 30 in Richtung auf das bewegliche Griffteil 5 wird ein Aufschwenken des die Einfahröffnung 32 aufweisenden freien Endes der Zugstange 30 bewirkt, zur Freigabe der Schwenkachse 27 des Schneidbacken-Paares 26. Darüber hinaus kann gegebenenfalls überlagert zu der Aufschwenkbewegung der Zugstange 30 eine Linearbewegung, geführt durch die in der langlochartigen Ausnehmung 31 eingreifenden Drehachse 7, gegeben sein. Hierbei wird der über die Zugachse 33 mitgeschleppte Steuerhebel 11 entgegen der Kraft der Rückstellfeder 14 schwenkverlagert.

In der aufgeschwenkten und gegebenenfalls schiebeverlagerten Stellung der Zugstange 30 gemäß der Darstellung in Figur 10 kann in handhabungstechnisch günstiger Weise eine Entnahme des Schneidbacken-Paares 26 erfolgen, bevorzugt unter Durchführen einer Schwenkbewegung der Schneidbacken 22 und 23 in Richtung auf eine Schließstellung entgegen der die Schneidbacken 22 und 23 belastenden Feder 28.

Auch ist nach einem Wiedereinsetzen eines Schneidbacken-Paares 26 die ordnungsgemäße Betriebsstellung der Abisolierzange 1 in handhabungstechnisch günstiger und werkzeugloser Weise einnehmbar.

Die Schneidbacken 22 und 23 sind in Richtung auf eine Schließstellung entgegen einer die Schneidbacken 22 und 23 in eine beispielsweise in Figur 6 dargestellte Offenstellung belastende Feder 28 bei einem Zusammenführen der Griffschenkel 4 und 5 aufeinander zu bewegbar.

Die Schneidbacken 22 und 23 sind weiter als Paar zusammengefasst herausnehmbar, zum Auswechseln. In weiterer Einzelheit sind die Schneidbacken 23 und 23 über eine Schwenkachse 27, die auch bevorzugt als Achsstift ausgebildet ist, miteinander schwenkbar verbunden.

Jede Schneidbacke 22, 23 stützt sich in der zugeordneten Zangenbacke 2, 3 über ein Kulissenteil 46, 47 ab, welches Kulissenteil 46, 47 sich wiederum an einer klemmbackenfesten Kulisse 48, 49 abstützt.

Diese mittelbare Abstützung der Schneidbacken 22, 23 an der jeweiligen Zangenbacke 2, 3 ist aus der eingangs erwähnten EP 1 557 920 B1 bekannt. Es wird bezüglich der Wirkungsweise auch auf den Inhalt dieser Patentschrift verwiesen.

Das gleitkeilartige Kulissenteil 46 beziehungsweise 47 ist geeignet zur Verlagerung entlang der backenseitig gleitkeilflächenartig ausgebildeten Kulisse 48 beziehungsweise 49. Die Radien der miteinander wirkenden Flächen von Kulissenteil 46, 47 und Kulisse 48, 49 sind einander angepasst. Insgesamt ist eine Schiebeverlagerbarkeit der Kulissenteile 46 und 47 im Wesentlichen in Verschieberichtung r der Zugstange 30 und des Schneidbacken-Paars 26 gegeben.

Das in der beweglichen Zangenbacke 3 geführte Kulissenteil 46 ist bevorzugt über eine Koppelstange 50 mit dem Wangenbereich 6 der feststehenden Zangenbacke 2 beziehungsweise des feststehenden Griffteils 4 verbunden, dies über eine endseitig der Koppelstange 50 vorgesehene erste Achse 51, die in dem Wangenbereich 6 in einem ersten Langloch 52 geführt ist.

Auch das in der feststehenden Zangenbacke 2 geführte Kulissenteil 47 kann eine Koppelstange 53 aufweisen, die endseitig eine zweite Achse 54 tragen kann, zum Eingriff in ein im Schulterbereich 8 der beweglichen Zangenbacke 3 vorgesehenes zweites Langloch 55.

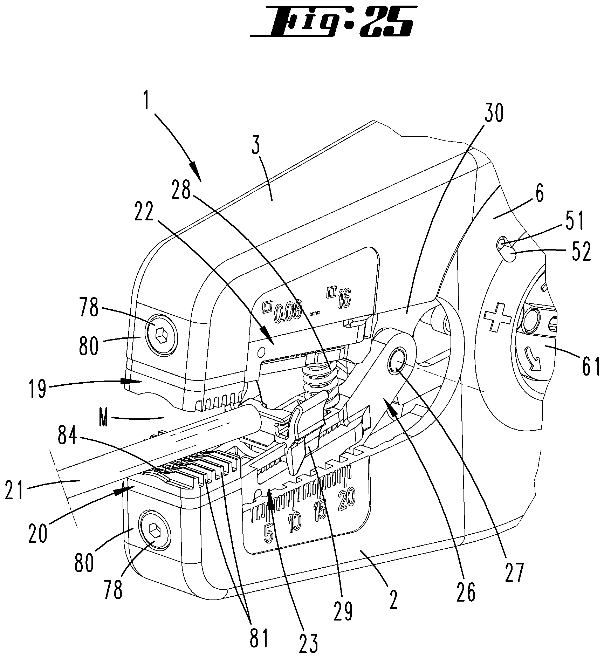

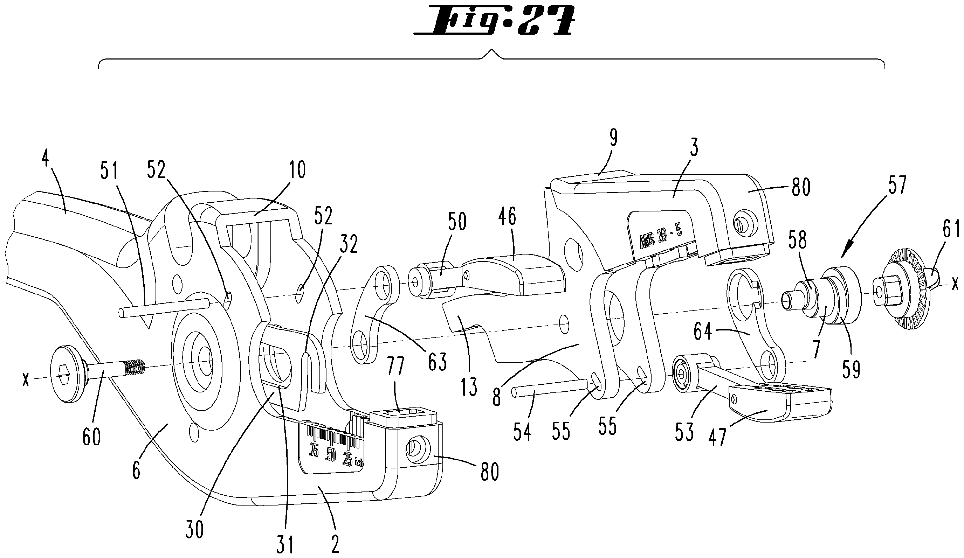

Mit Bezug auf eine Grundstellung beispielsweise gemäß der Darstellung in Figur 6 sind die Langlöcher 52 (siehe auch Figur 25) und 55 (siehe auch Figur 27) mit Bezug auf eine Projektion derselben in Richtung der geometrischen Drehachse x in eine senkrecht zur Drehachse x ausgerichteten Ebene so ausgerichtet, dass diese zu der Verschieberichtung r im Wesentlichen jeweils einen spitzen Winkel von etwa 45° einschließen, wobei beide Langlöcher 52 und 55 im Wesentlichen in Richtung auf die Drehachse x geneigt verlaufen.

Zufolge der vorbeschriebenen Anordnung der Kulissenteile 46 und 47 in Zusammenwirkung mit den backenseitigen Kulissen 48 und 49, wie auch weiter zufolge der Anbindung der Kulissenteile 46 und 47 über die Koppelstangen 50 und 53 an einem Bereich der im Wesentlichen gegenüberliegenden Zangenbacke ist bei dem Ausführungsbeispiel eine selbsttätige (automatische) Schneidtiefenanpassung in Abhängigkeit von dem Kabel-Außendurchmesser gegeben.

Es ergeben sich in Abhängigkeit von dem Durchmesser beziehungsweise der Dicke des zwischen den Klemmbacken 19 und 20 zu erfassenden Kabels 21 bei entsprechendem Zusammendrücken der Griffteile 4 und 5 unterschiedliche Schneidtiefen der Schneiden 24 und 25 der Schneidbacken 22 und 23, da in Abhängigkeit mit der erfassten Kabeldicke und der damit einhergehenden Beabstandung der Klemmbacken 19 und 20 und hierüber der Zangenbacken 2 und 3 eine Schiebeverlagerung der Kulissenteile 46 und 47 entlang der Kulissen 48, 49 einhergeht, demzufolge sich der Abstützpunkt für die Schneidbacken 22 und 23 an den Kulissenteilen 46 und 47 ändert. Die Kulissenteile 46 und 47 werden in Abhängigkeit von der Kabeldicke in gleichem Maße in beziehungsweise entgegen der Verschieberichtung r über die Koppelstangen 50 und 53 verlagert.

Die Einstellung der Schnitttiefe erfolgt dadurch, dass bei einem Zusammendrücken der Griffteile 4 und 5 und hierüber der Zangenbacken 2 und 3 und der damit verbundenen Auslenkung der beweglichen Zangenbacke 3 um die Drehachse 7 das untere Kulissenteil 47 in der feststehenden Zangenbacke 2 über die mit der beweglichen Zangenbacke 3 verbundene Koppelstange 53 leicht von der Maulspitze weggezogen wird. Dabei wird das Kulissenteil 47 um einen Betrag verschoben. Durch diese Verschiebung wird die zugeordnete Schneidbacke 23 um einen Zustellbetrag geschlossen und zugleich die Winkellage des Kulissenteiles 47 verändert.

Synchron hierzu erfolgt über das über die Koppelstange 50 mit der feststehenden Zangenbacke 2 verbundene Kulissenteil 46 eine Auslenkung der beweglichen Zangenbacke 3, so dass eine Relativbewegung des Kulissenteils 46 gegenüber der zugeordneten Kulisse 48 in gleicher Richtung wie bei dem Kulissenteil 47 erfolgt. So erfolgen auch hier eine Zustellbewegung der zugeordneten Schneidbacke 22 senkrecht zur Längsverschiebung und die Lagekorrektur des Kulissenteils 46.

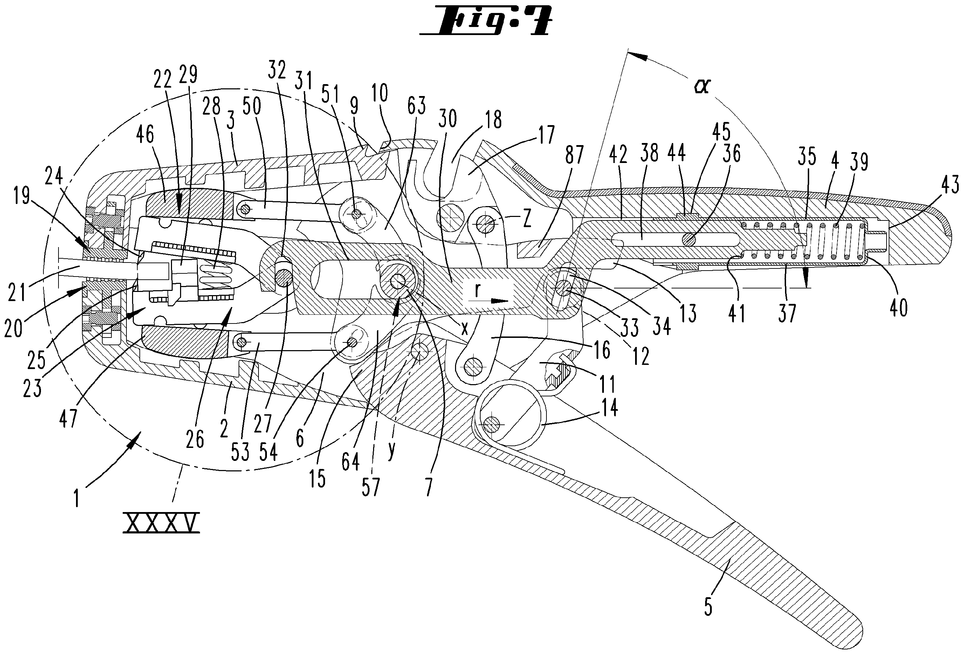

Im Zuge des Zusammendrückens der Griffteile 4 und 5 wird zunächst ein Schließen des Zangenmauls M zufolge entsprechender Schwenkverlagerung der beweglichen Zangenbacke 3 unter Überlagerung einer Schließung des Schneidbacken-Paares 26 durchgeführt (vergleiche Figur 7). Die Schneiden 17 der Schneidbacken 22 und 23 schneiden in den Isolationsmantel des Kabels 21 ein, dies mit einer Einschnitttiefe, die gemäß der vorbeschriebenen Ausgestaltung in Abhängigkeit von der Kabeldicke sich automatisch einstellt.

Die Schwenkverlagerung der beweglichen Zangenbacke 3 ist erreicht zufolge einer entsprechenden Beaufschlagung der an dem Steuerhebel 11 angeordneten Rolle 12 an einer zugewandten, in der Grundstellung der Abisolierzange 1 in etwa in Verschieberichtung r ausgerichteten Steuerfläche des Auslegers 13.

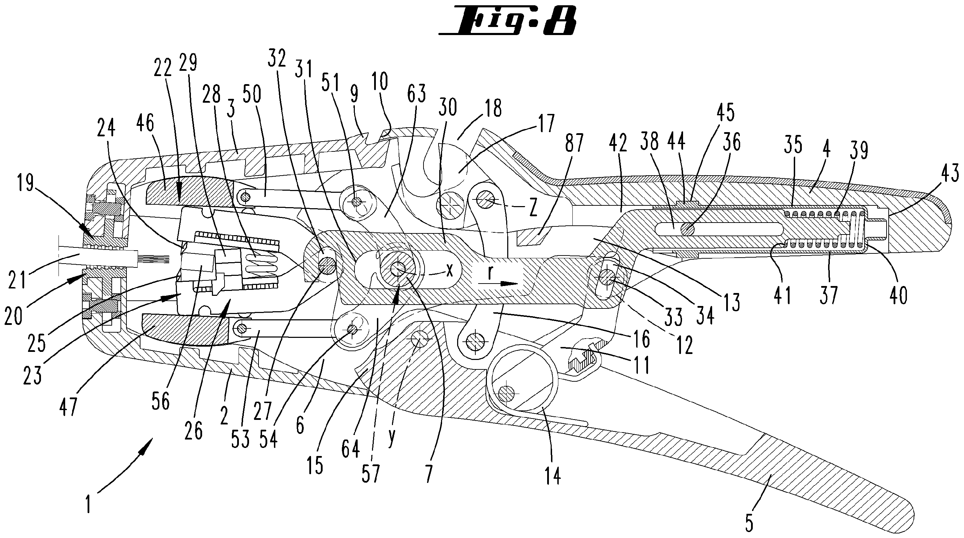

Bei weiterer Schwenkverlagerung des beweglichen Griffteiles 5 in Richtung auf den feststehenden Griffteil 4 gemäß der Darstellung in Figur 8 gleitet die Rolle 12 des Auslegers 13 entlang der zugewandten und vorbeschriebenen Stirnfläche des Auslegers 13 unter Überwindung der Rückstellkraft der in der Hülse 35 auf die Zugstange 30 einwirkenden Feder 39. Die Zugstange 30 wird linear in Verschieberichtung r gezogen, unter Mitschleppung des Schneidbacken-Paars 26. Hierdurch erfolgt das Abstreifen des durch Einschneiden mittels der Schneiden 17 separierten Isolationsabschnittes 56 vom Leiter.

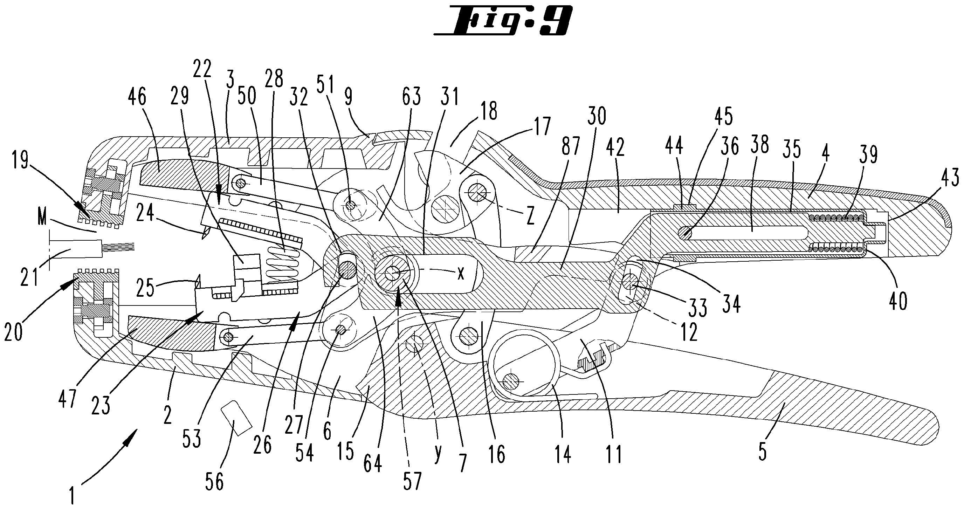

Gemäß der Darstellung in Figur 9 verlässt die auslegerseitige Rolle 12 bei einem weiteren Zusammendrücken der Griffteile 4 und 5 die abstützende Stellung zu dem Ausleger 13 der beweglichen Zangenbacke 3, welche zurück in Richtung auf ihre Offen-Grundstellung verschwenkt, unter gleichzeitiger Öffnung des Zangenmauls M, wie auch des Schneidbacken-Paares 26. Dies unter anderem bedingt durch die Rückstellkraft der zwischen den Schneidbacken 22 und 23 vorgesehenen Feder 28.

Das endseitig abisolierte Kabel 31 liegt zur Entnahme aus der Abisolierzange 1 frei. Der abgetrennte und abgezogene Isolationsabschnitt 56 liegt zur Entnahme frei oder fällt gegebenenfalls selbsttätig aus dem Zangenmaul M.

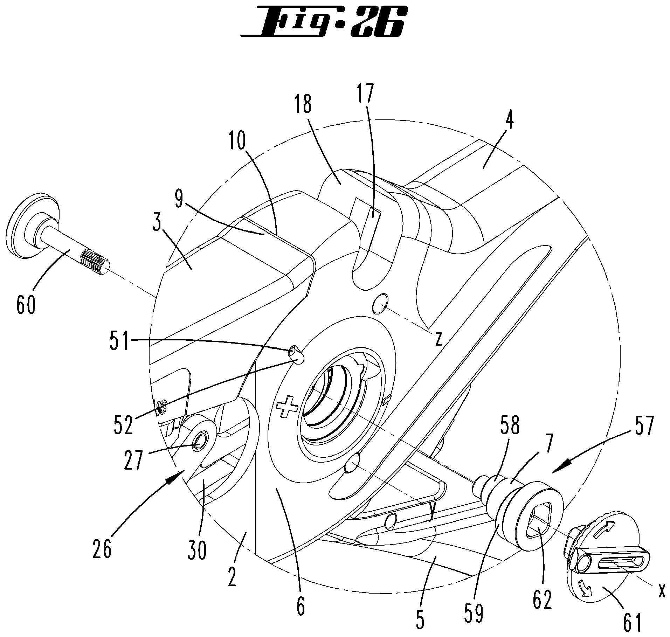

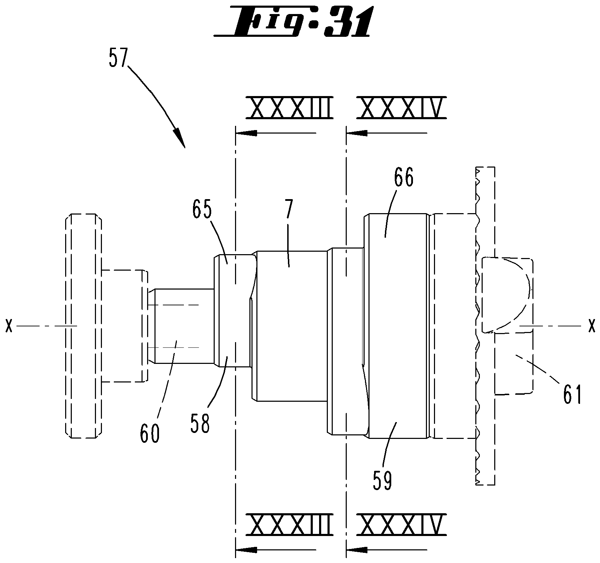

Zur Ermöglichung einer Justierung der automatischen Schneidtiefenanpassung der Schneiden 24 und 25 der Schneidbacken 22 und 23 kann ein zentrales Verstellmittel vorgesehen sein. Dieses kann, wie beispielhaft in Figur 26 dargestellt, ein einstückig ausgebildetes Exzenterteil 57 sein mit zwei in Achsrichtung des Exzenterteils 57 zueinander beabstandeten Exzentern 58 und 59. Weiter wird hierzu auf die Figuren 31 bis 34 verwiesen.

Weiter kann das Exzenterteil 57, wie auch dargestellt, die Drehachse 7 bilden, insbesondere durch einen zwischen den Exzentern 58 und 59 gebildeten, im Querschnitt kreisrunden und konzentrischen Exzenterteilbereich.

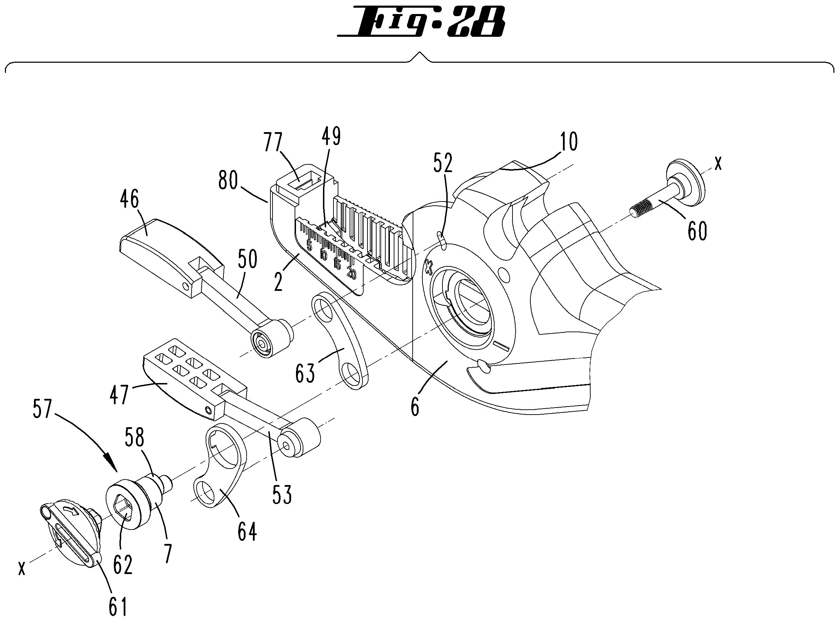

Das Exzenterteil 57, vergleiche auch Figur 28, kann hohlwellenartig gebildet sein, zum Durchsatz einer zentralen, massiven Welle. Diese kann weiter gebildet sein durch einen Schraubbolzen 60, über welchen das Exzenterteil 57 an dem Wangenbereich 6 der feststehenden Zangenbacke 2 drehhalterbar ist. Der Schraubbolzen 60 stützt sich hierbei endseitig mit einem Kragen wangenseitig ab. Diesem Kragen in Achsrichtung gegenüberliegend erfolgt eine Verschraubung mit einer von außen zugänglichen, tellerförmigen Handhabe 61, welche mit einem, wie dargestellten, Vierkant-Fortsatz drehfest in eine entsprechend ausgebildete koaxiale Ausnehmung 62 des Exzenterteils 57 eingreift. Eine Drehverlagerung der Handhabe 61 um die geometrische Drehachse x führt entsprechend zu einer Drehverlagerung des Exzenterteils 57 insgesamt. Es kann eine Rastdrehverlagerung gegeben sein.

Der bezüglich des die Drehachse 7 ausformenden Mittelbereichs des Exzenterteils 57 der Handhabe 61 zugewandte zweite Exzenter 59 kann insgesamt, d.h. auch bezüglich der nockenartigen Erweiterung, durchmessergrößer ausgebildet sein als der die Drehachse 7 bildende Abschnitt, während der weitere, entfernt zu der Handhabe 61 ausgebildete erste Exzenter 58 gegenüber dem mittleren, die Drehachse 7 bildenden Bereich durchmesserkleiner ausgebildet sein kann.

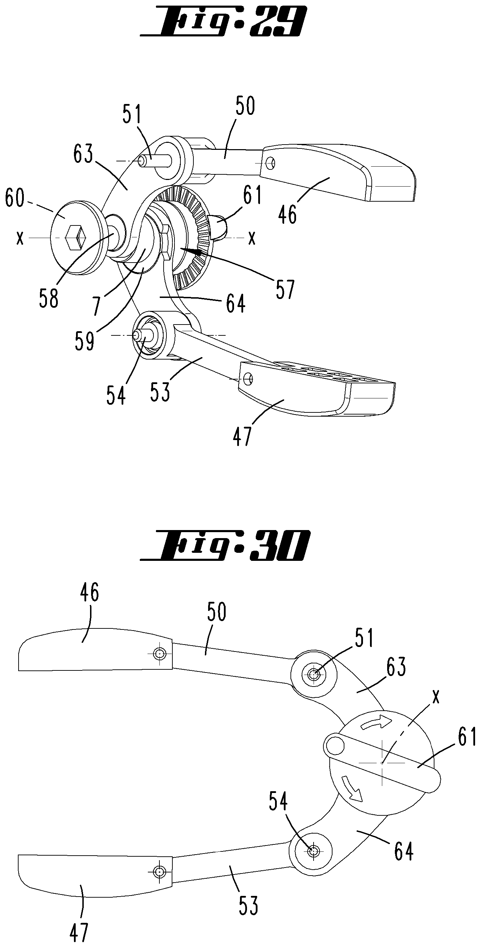

Die Exzenter 58 und 59 wirken über erste und zweite Lenker 63, 64 auf die erste beziehungsweise zweite Achse 51, 54 der Koppelstangen 50, 53 (siehe Figuren 30, 35 und 36).

Die Justierung der auch durch diese Ausgestaltung weiterhin gegebene automatische Schneidtiefeneinstellung erfolgt zufolge Verdrehen der Handhabe 61, was entsprechend über die formschlüssige Verbindung zu einer Drehverlagerung der Exzenter 58 und 59 führt, weiter entsprechend zu einer Verlagerung der exzentrisch gegenüber der geometrischen Drehachse x im Querschnitt vorgewölbten Steuerbereiche 65, 66 um den jeweiligen Winkelbetrag.

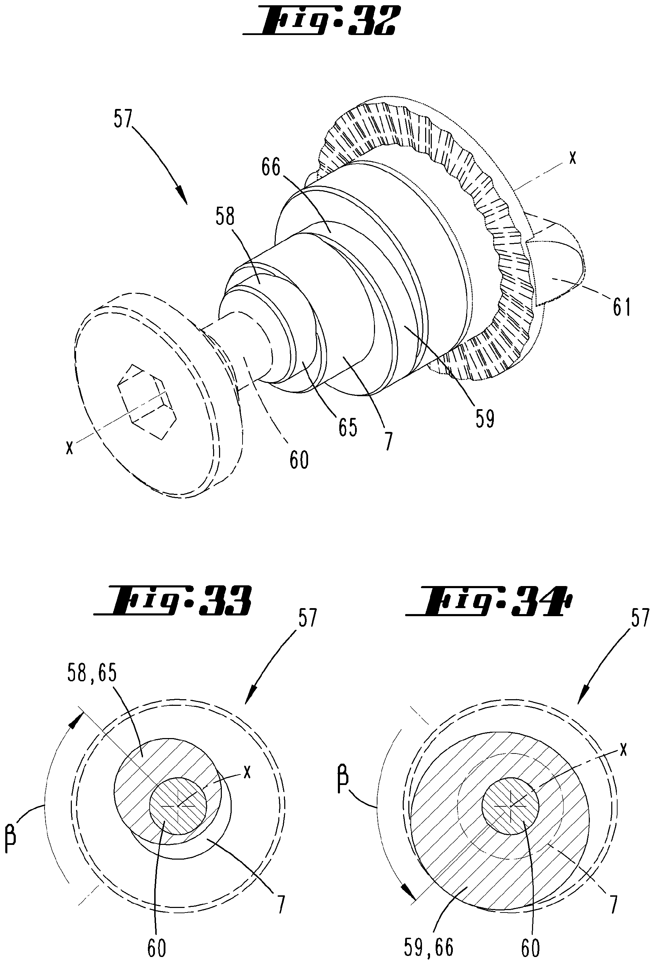

Wie aus den Schnittdarstellungen in den Figuren 33 und 34 zu erkennen, können gemäß dem dargestellten Ausführungsbeispiel die Steuerbereiche 65 und 66 der Exzenter 58 und 59 mit Bezug auf die geometrische Drehachse x um einen Winkel β von etwa 90° zueinander versetzt angeordnet sein.

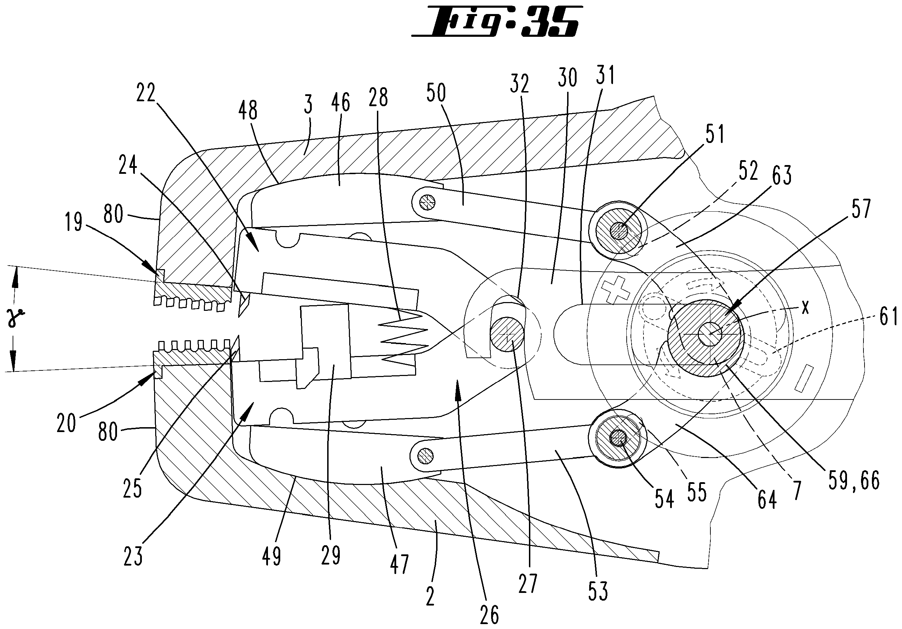

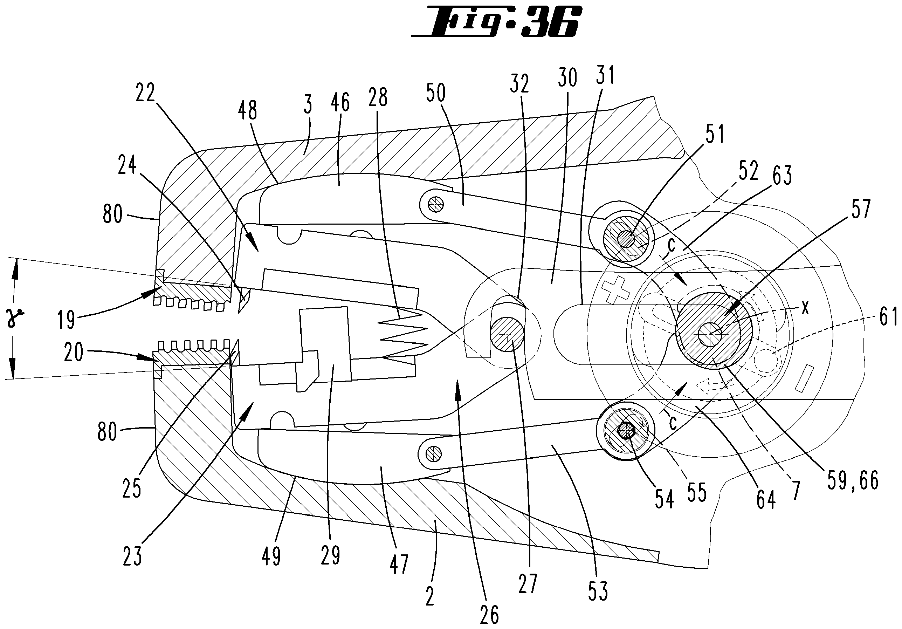

Zufolge Verdrehen der Handhabe 61 und damit einhergehendem Verdrehen der Exzenter 58 und 59 um die geometrische Drehachse x ist eine gleichmäßige und gleichgerichtete Verlagerung der ersten und zweiten Achse 51, 54 beider Koppelstangen 50 und 53 in den zugeordneten ersten und zweiten Langlöchern 52, 55 erreichbar (siehe Pfeile c). In Figur 36 ist eine gegenüber der Stellung in Figur 35 um 180° verdrehte Handhaben-Stellung gezeigt. Entsprechend sind die Steuerbereiche 65 und 66 der Exzenter 58 und 59 in eine mit Bezug zu der geometrischen Drehachse x gegenüberliegende Stellung verdreht, unter entsprechender Schleppmitnahme der zugeordneten Lenker 63 und 64. Letztere umfassen in einer möglichen Ausgestaltung die umlaufende Stirnfläche des jeweiligen Exzenters.

Die Achsen 51 und 54 sind gemäß dem Beispiel um etwa das halbe Erstreckungsmaß des jeweils zugeordneten Langlochs 52, 55 in dem Langloch 52, 55 verlagert, unter entsprechendem Mitschleppen der an den Achsen 51 und 54 angebundenen Koppelstangen 50 und 53 sowie der abschließend vorgesehenen Kulissenteile 46 und 47.

Im Falle der Anordnung einer so ausgebildeten Verstellmittel-Anordnung kann über die Handhabe 61 und entsprechend über die Exzenter 58 und 59 die Winkellage der Kulissenteile 46 und 47 und die Relativlage derselben zu der jeweiligen Kulisse 48, 49 bezüglich der Grundausrichtung in der Zangenmaul-Offenstellung eingestellt werden, aus welcher Grundstellung heraus im Zuge der üblichen Nutzung der Abisolierzange 1 eine weitere automatische Anpassung an die Kabeldicke erfolgen kann.

Gemäß den Darstellungen in den Figuren 35 und 36 kann eine beispielhafte Verstellung der Exzenter 58 und 59 um 180° zur Justierung der automatischen Schneidtiefeneinstellung eine in diesen Darstellungen gezeigte Öffnung der Schneidbacken 22 und 23 bezüglich eines Öffnungswinkels γ um ein Viertel bis ein Achtel, weiter beispielsweise etwa einem Sechstel des Winkelmaßes vergrößern.

Die Relativanordnung der ersten und zweiten Achse 51, 54 in den zugeordneten Langlöchern 52 und 55 ist hierbei unabhängig von einer Schwenkstellung der Klemmbacken 19, 20 beziehungsweise der Zangenbacken 2 und 3.

Die Abisolierzange 1 kann mit nachfolgend näher beschriebenen Klemmbacken 19 und 20 und/oder nachstehend näher beschriebenen Schneiden 17 versehen sein.

Die Schneiden 24, 25 der Schneidbacken 22, 23 können über stirnseitig zu bedienende Schrauben 67 an der jeweiligen Schneidbacke 22 beziehungsweise 23 festlegbar sein.

Hierzu kann jede zumindest im Wesentlichen plattenförmig gebildete Schneide 24, 25 eine von der jeweiligen Schraube 67 zu durchsetzende Bohrung 68 aufweisen.

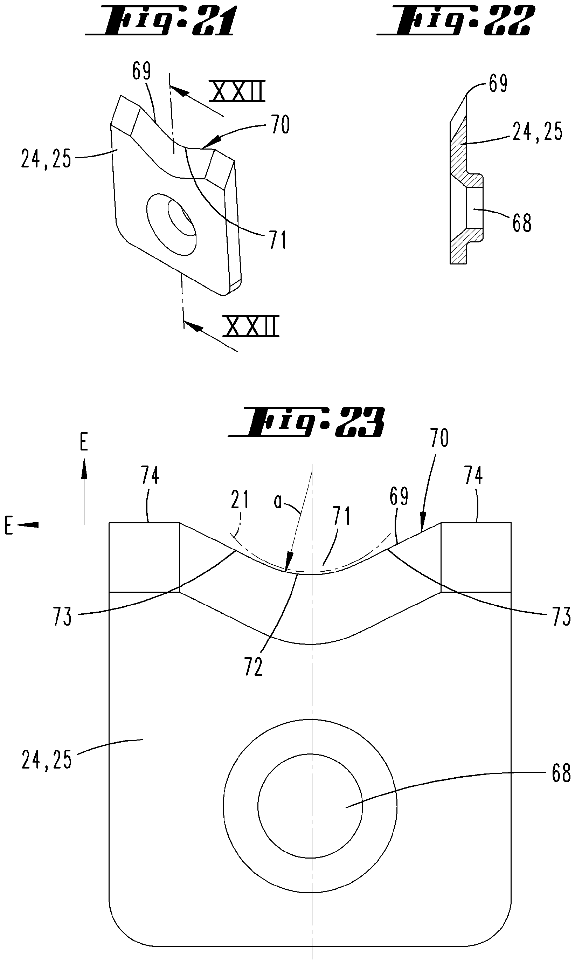

Die Schneide 24, 25 weist eine im Nutzungszustand in Richtung auf das Zangenmaul M weisende Schneidenspitze 69 auf, mit einem im Querschnitt gemäß der Darstellungen in den Figuren 21 und 22 in einem spitzen Winkel auslaufenden Ende, das in einer Seitenansicht gemäß Figur 23 eine Konturlinie 70 bildet. In der Seitenansicht gemäß Figur 23 bildet die Konturlinie 70 zugleich eine Abschlusslinie der Schneide 17.

Die Konturlinie 70 weist eine Einsenkung 71 auf. Diese erscheint in einem in Längserstreckung der Konturlinie 70 betrachteten mittigen Bereich als stetig gekrümmte Linie (gekrümmter Bereich 72), bevorzugt einer Kreislinie, mit einem Radius a, an die sich beidseitig unter Fortsetzung der Umschließung eines eingelegten Kabels 21 eine Linie beziehungsweise Abschnitt 73 mit geringerer Krümmung anschließt. Gemäß dem dargestellten Ausführungsbeispiel kann diese sich an die mittige gekrümmte Linie anschließende Linie beidseitig der Krümmung eine Gerade sein, so dass sich insgesamt eine im Wesentlichen V-förmige Einsenkung 71 der Konturlinie 70 ergibt, mit einer entsprechend mit dem Radius a verrundeten V-Spitze.

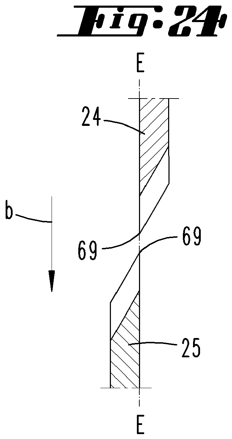

Die sich an die verrundete Kontur im Bereich 72 anschließende Konturlinie im Abschnitt 73 kann sich, bezogen auf eine Schneidrichtung b einer Schneidebene E in Richtung der Schneidrichtung b fortsetzen (vergleiche Figur 24). Sie steigt entsprechend beim Ausführungsbeispiel und mit Bezug zu Fig. 29 ausgehend von der Einsenkung in der Schneidrichtung b nach oben an bzw. fällt nach unten ab.

Die Einsenkung 71 begrenzend setzt sich die Konturlinie 70 bevorzugt beidseitig der Einsenkung 71 fort in gerade verlaufende Abschnitte 74, die entsprechend einer gemeinsamen, quer zur Schneidrichtung b verlaufenden Gerade verlaufen.

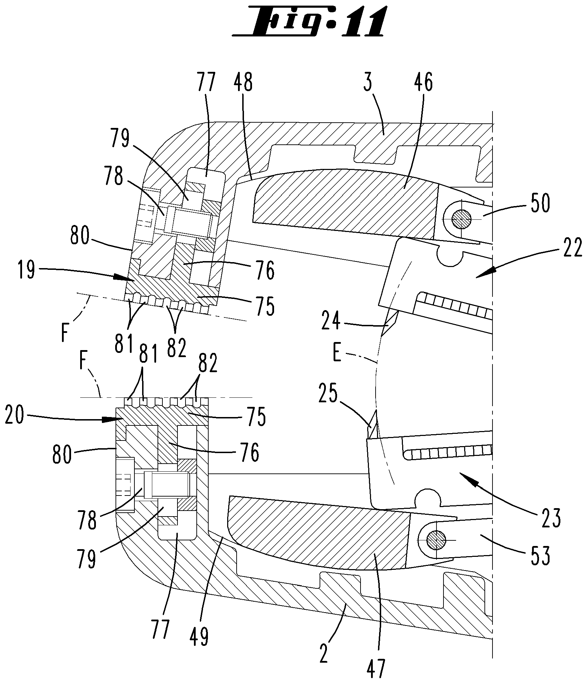

Die Konturlinie 70 setzt sich hierbei auch in einer Ebenenerstreckung der - in Strenge gekrümmt verlaufenden, siehe Figuren 3 und 11 - Schneidebene E fort, vergl. Fig. 23. Die Konturlinie 70 erstreckt sich damit auch in der Breite und der Höhe und zwar bevorzugt relativ weniger stark in der Höhe als im Bereich der verrundeten Kontur und relativ stark in der Breite als im Bereich der verrundeten Kontur.

Jede Klemmbacke 19 beziehungsweise 20 kann, wie dargestellt, zunächst einen plattenförmigen Grundkörper 75 aufweisen, mit zwei gegenüberliegenden Breitseitenflächen. Von einer Breitseitenfläche ragt bei etwa mittiger Anordnung ein Befestigungsfortsatz 76 senkrecht ab. Dieser kann plattenartig gebildet sein mit einer im Einbauzustand quer zu einer Ausrichtung eines zu ergreifenden Kabels 21 zwischen den Klemmbacken 19 und 20 sich erstreckenden Plattenebene.

Mittels des Befestigungsfortsatzes 76 ist eine Befestigung der Klemmbacke 19 beziehungsweise 20 an der zugeordneten Zangenbacke 2 beziehungsweise 3 ermöglicht, zufolge Einschub des Befestigungsfortsatzes 76 in eine entsprechend ausgebildete Aufnahmetasche 77 der Zangenbacke 2, 3.

Die Festlegung an der Zangenbacke 2, 3 erfolgt zufolge einer Verschraubung. Die diesbezügliche Befestigungsschraube 78 durchsetzt hierzu eine entsprechende Bohrung in der Zangenbacke 2, 3 sowie ein Langloch 79 in dem Befestigungsfortsatz 76, wobei die Schraubbefestigung der Klemmbacke 19, 20 von einer Stirnfläche 80 der jeweiligen Zangenbacke 2, 3 aus erfolgt.

Beide Klemmbacken 19 und 20 sind bezüglich der in Einbausituation aufeinander zu weisenden Breitseiten der Grundkörper 75 mit quer zu einem zwischen die Klemmbacken 19 und 20 klemmzuhalternden Kabel 21 verlaufenden Rippen 81 versehen. Zwischen diesen Rippen 81 verlaufen nutartige Ausnehmungen 82 mit jeweils einem Ausnehmungsboden 83.

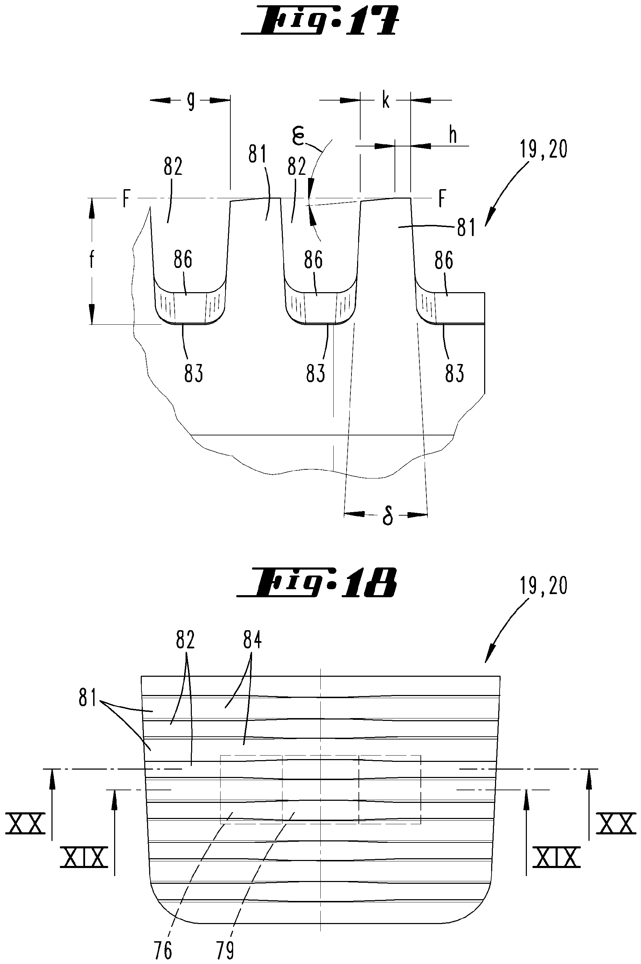

Gemäß dem dargestellten Ausführungsbeispiel, und bevorzugt, können je Klemmbacke 19, 20 beispielsweise sechs solcher Rippen 81 vorgesehen sein, die quer zur Längserstreckung der Rippen 81 betrachtet gleichmäßig zueinander beabstandet sind, vergleiche auch Figur 18. Weiter sind die Rippen 81 so angeordnet, dass diese, in Abhängigkeit von einer Dicke des zu klemmenden Kabels 21, aber auch ohne Einlegen eines Kabels 21, kammartig in die Ausnehmungen 82 der gegenüberliegenden Klemmbacke einfahren können.

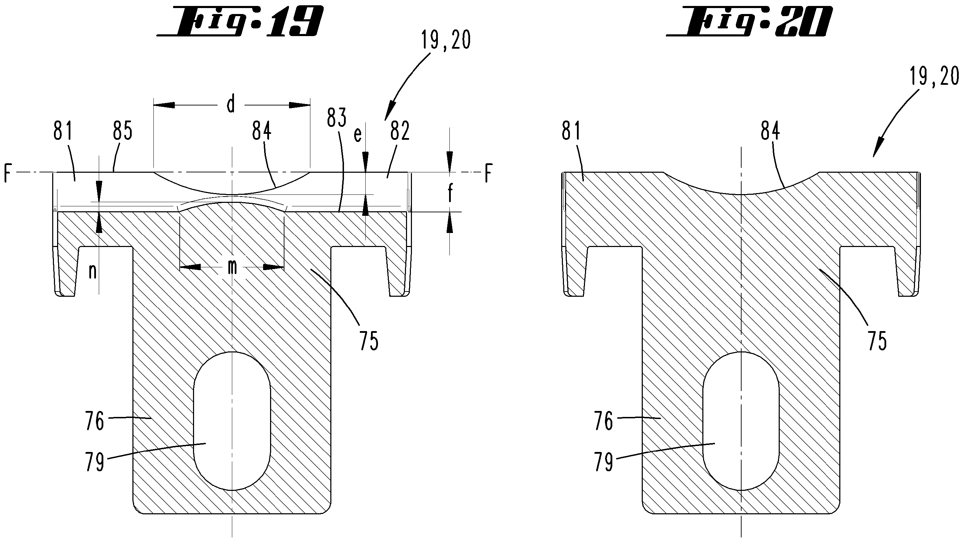

Alle Rippen 81 beider Klemmbacken 19 und 20 weisen, wie dargestellt, auf einem Teil ihrer Längserstreckung, weiter bevorzugt mittig ihrer Längserstreckung, eine konkave Ausbuchtung 84 auf. Hieraus ergibt sich bei bevorzugt in einer Längserstreckung eines eingelegten Kabels betrachtet fluchtender Anordnung der Ausnehmungen 84 und über alle Rippen 81 betrachtet eine im Wesentlichen mittige wannenförmige Senke - im Sinne einer Hüllfläche über die Konturlinien der Ausbuchtungen in der genannten Längserstreckung - bezüglich der in Richtung auf das Zangenmaul M weisenden Rippenoberfläche 85. Hierzu wird auch auf die Figuren 19 und 20 verwiesen.

Die Rippenoberfläche 85 beidseitig der Ausbuchtungen 84 spannen insgesamt eine ebene Klemmfläche F auf.

Die in Erstreckungsrichtung einer Rippe 81 betrachtete Breite d einer Ausbuchtung 84 kann etwa dem halben Rippenlängserstreckungsmaß entsprechen. Die senkrecht zum Breitenmaß d betrachtete Tiefe e einer Ausbuchtung 84 kann etwa der halben maximalen, in selber Richtung betrachteten größten Tiefe f einer Ausnehmung 82 entsprechen.

Auch kann die größte Tiefe f einer Ausnehmung 82 in dem dargestellten Ausführungsbeispiel etwa dem 1,5-Fachen des quer zur Rippenlängserstreckung betrachteten freien Abstandes g zwischen zwei benachbarten Rippen 81 im Bereich ihrer Rippenoberfläche 85 entsprechen (vergleiche Figur 17).

Zudem kann jede Rippe 81, bezogen auf einen Querschnitt quer zur Längserstreckung der Rippe 81, ausgehend von dem Ausnehmungsboden 83 sich in Richtung zur Rippenoberfläche 85 konisch verjüngen. So können die, die Ausnehmung 82 begrenzenden Rippenaußenflächen zueinander einen Konuswinkel δ von etwa 15° einschließen.

Die Rippenoberfläche 85 einer jeden Rippe 81 kann sich mit Bezug quer zu einer Längserstreckung der Rippe 81 über einen Teilbereich in einer die Klemmfläche F definierenden Ebene erstrecken, so beispielsweise gemäß der Darstellung in Figur 17 über eine Länge h, die etwa einem Drittel der in die Klemmfläche F projizierten Gesamtlänge k entsprechen kann. Der über die Länge h hinausgehende Abschnitt der Rippenoberfläche 85 kann gemäß der in Figur 17 gezeigten Ausführungsform unter einem Winkel ε von etwa 5° abfallen.

Der Ausnehmungsboden 83 ist über die Länge der Ausnehmung 82 unterschiedlich tief ausgebildet, entsprechend weist er unterschiedliche Maße f auf. So ist, wie auch dargestellt, im Bereich der Ausbuchtung 84 ausnehmungsbodenseitig eine kuppelartige Erhöhung 86 vorgesehen mit einer in Längserstreckung der Ausnehmung 82 betrachteten Breite m, die etwa einem Drittel der Gesamtlänge der Ausnehmung 82 beziehungsweise einer Rippe 81 entsprechen kann und einer Höhe n über das Niveau des sich an die Erhöhung 86 anschließenden Bereichs des Ausnehmungsbodens 83, welche Höhe n etwa einem Drittel bis einem Fünftel der größten Tiefe f der Ausnehmung 82 entspricht.

Die Anordnung und die Abmaße von Ausbuchtung 84 und Erhöhung 86 können weiter so gewählt sein, dass selbst im Bereich der Erhöhung 86 die Ausbuchtung 84 nicht den Ausnehmungsboden 83 erreicht.

## Patentansprüche

1. Klemmbacken (19, 20) für eine Abisolierzange (1) mit jeweils einer Klemmfläche (F) und einem Befestigungsfortsatz (76), wobei an der Klemmfläche (F) quer zu einer Längsrichtung eines im Einbauzustand zu klemmenden Kabels (21) verlaufende Rippen (81) ausgebildet sind, mit entsprechend dazwischen verlaufenden nutartigen Ausnehmungen (82), die einen Ausnehmungsboden (83) aufweisen, wobei weiter im Einbauzustand der Klemmbacken (19, 20) die Rippen (81) in Abhängigkeit von einer Dicke des zu greifenden Kabels (21) in die Ausnehmungen (82) der gegenüberliegenden Klemmbacke (19, 20) einfahren können und alle Rippen (81) beider im Einbauzustand gegenüberliegenden Klemmbacken (19, 20) auf einem Teil ihrer Längserstreckung eine konkave Ausbuchtung (84) aufweisen, wobei der Ausnehmungsboden (83) über eine Länge einer Ausnehmung (82) unterschiedlich tief ausgebildet ist, wobei der Ausnehmungsboden (83) im Bereich der Ausbuchtung (84) eine geringste Tiefe aufweist, **dadurch gekennzeichnet, dass** der Ausnehmungsboden (83) bezogen auf einen Längsquerschnitt der Ausnehmung (82) im Bereich der Ausbuchtung (84) eine kuppelartige Erhöhung (86) aufweist, die gegensinnig gekrümmt zu einer im Querschnitt betrachtet zugeordneten Randkante der Ausbuchtung (84) ist, mit einer Höhe (n) über einem Niveau des sich an die Erhöhung (86) anschließenden Bereichs des Ausnehmungsbodens (83), welche Höhe (n) einem Drittel bis einem Fünftel einer größten Tiefe (f) der Ausnehmung (82) entspricht.

2. Klemmbacken nach Anspruch 1, **dadurch gekennzeichnet, dass** eine größte Tiefe (f) der Ausnehmung (82) einem Drittel bis fünf Drittel des freien Abstandes (g) zwischen zwei Rippen (81) im Bereich ihrer Rippenoberfläche (85) entspricht.

3. Klemmbacken nach einem der vorhergehenden Ansprüche, **dadurch gekennzeichnet, dass** ein Befestigungsfortsatz (76) plattenartig gebildet ist, mit einer sich in Erstreckungsrichtung einer Rippe (81) erstreckenden Plattenebene.

4. Klemmbacken nach Anspruch 3, **dadurch gekennzeichnet, dass** der Befestigungsfortsatz (76) ein Langloch (79) aufweist, mit einer größten Länge senkrecht zu der Erstreckungsrichtung einer Rippe (81), wobei, bevorzugt, das Langloch (79) von einer Befestigungsschrauben (78) durchsetzt ist, zur Schraubbefestigung der Klemmbacke (19, 20) von einer Stirnfläche (80) einer Zangenbacke (2, 3) aus.

5. Abisolierzange (1) mit zwei äußeren Klemmbacken (19, 20), zwei inneren Schneidbacken (22, 23) mit Schneiden (24, 25) und zwei Griffteilen (4, 5), **gekennzeichnet durch** Klemmbacken (19, 20) nach einem der Ansprüche 1 bis 4.

6. Abisolierzange nach Anspruch 5, **dadurch gekennzeichnet, dass** die Schneiden (24, 25) an ihren freien, in einer Schneidenspitze (69) mit einem im Querschnitt spitzen Winkel auslaufenden Enden eine Konturlinie (70) aufweisen, die bezogen auf eine Seitenansicht, in der die Konturlinie (70) die Abschlusslinie der Schneide (24, 25) bildet, eine Einsenkung (71) aufweist, dass die Konturlinie (70) an einer einteilig ausgebildeten Schneide (24, 25) gegeben ist und die Einsenkung (71) in der Seitenansicht als stetig gekrümmte Linie erscheint, die einen ersten Radius aufweisen kann, dass sich an die Einsenkung (71) beidseitig unter Fortsetzung der Umschließung eines eingelegten Kabels (21) eine Konturlinie anschließt, die in einer Schneidrichtung (b) einer Schneidebene (E) sich in Richtung der Schneidrichtung (b) und der Schneidebene (E) fortsetzt und eine gegenüber der ersten Krümmung geringere zweite Krümmung aufweist.

7. Abisolierzange nach Anspruch 6, **dadurch gekennzeichnet, dass** sich an die zweite Krümmung beidseitig unmittelbar ein gerader Abschnitt der Konturlinie anschließt, beide gerade verlaufenden Abschnitte entsprechend einer gemeinsamen Gerade verlaufen und mit der Einsenkung die Konturlinie der Schneide insgesamt bildet.

8. Abisolierzange nach einem der Ansprüche 5 bis 7, **dadurch gekennzeichnet, dass** die geringere Krümmung einer Kreislinie mit einem zweiten Radius folgt.

9. Abisolierzange nach einem der Ansprüche 5 bis 8, **dadurch gekennzeichnet, dass** sich an die erste Krümmung oder an die zweite Krümmung ein gerade verlaufender Abschnitt (73) der Konturlinie (70) anschließt.

## Claims

1. Gripper jaws (19, 20) for an insulation stripper (1) each having a gripping surface (F) and an attachment extension (76), wherein ribs (81) running transversely to a longitudinal direction of a cable (21) to be gripped in the installation state, are formed on the gripping surface (F), with groove-like recesses (82) running accordingly therebetween, which recesses have a recess base (83), wherein further in the installation state of the gripper jaws (19, 20), the ribs (81) can travel into the recesses (82) of the opposite gripper jaw (19, 20) depending on a thickness of the cable (21) to be gripped, all the ribs (81) of both opposite gripper jaws (19, 20) in the installation state have a concave protuberance (84) on a part of their longitudinal extension, wherein the recess base (83) is configured to be variously deep over the length of a recess (82), wherein the recess base (83) in the region of the protuberance (84) has a smallest depth, **characterised in that** the recess base (83) has a dome-like elevation (86) in relation to a longitudinal cross-section of the recess (82) in the region of the protuberance (84), which dome-like elevation is curved in opposite directions to an associated marginal edge of the protuberance (84) when viewed in cross-section, having a height (n) above a level of the region of the recess base (83) adjoining the elevation (86), which height (n) corresponds to a third to a fifth of a greatest depth (f) of the recess (82).

2. The gripper jaws as claimed in claim 1, **characterised in that** a greatest depth (f) of the recess (82) corresponds to one third to five thirds of the free distance (g) between two ribs (81) in the region of their rib surface (85).

3. The gripper jaws according to one of the preceding claims, **characterised in that** an attachment extension (76) is formed in a plate-like manner with a plate plane extending in the direction of extension of a rib (81).

4. The gripper jaws according to claim 3, **characterised in that** the attachment extension (76) has a slot (79) with a greatest length perpendicular to the direction of extension of a rib (81), wherein preferably the slot (79) is traversed by a fastening screw (78) for the screw fastening of the gripper jaw (19, 20) from a front face (80) of a plier jaw (2, 3).

5. An insulation stripper having two outer gripper jaws (19, 20), two inner cutting jaws (22, 23) with blades (24, 25), and two handle parts (4, 5), **characterised by** gripper jaws (19, 20) according to one of the claims 1 to 4.

6. The insulation stripper according to claim 5, **characterised in that** at their free ends which run out in a blade tip (69) having an acute angle in cross-section, the blades (24, 25) have a contour line (70), which has a depression (71) in relation to a side view, in which the contour line (70) forms the termination line of the blade (24, 25), that the contour line (70) is given on an integrally formed blade (24, 25) in one piece and the depression (71) appears in the side view as a continuously curved line, which can have a first radius, that on both sides while continuing the enclosure of an inserted cable (21), the depression (71) is adjoined by a contour line, which in a cutting direction (b) of a cutting plane (E) continues in the direction of the cutting direction (b) and the cutting plane (E) and has a smaller curvature compared with the first curvature.

7. The insulation stripper according to claim 6, **characterised in that** the second curvature is adjoined directly on both sides by a straight section of the contour line, both straight sections run according to a common straight line and with the depression forms the overall contour line of the blade.

8. The insulation stripper according to one of the claims 5 to 7, wherein the smaller curvature follows a circular line having an optionally second radius.

9. The insulation stripper according to one of the claims 5 to 8, wherein the first or second curvature is adjoined by a straight-running section (73) of the contour line (70).

## Revendications

1. Mâchoires de serrage (19, 20) pour une pince à dénuder (1) avec respectivement une surface de serrage (F) et un prolongement de fixation (76), des nervures (81) s'étendant transversalement à une direction longitudinale d'un câble (21) à serrer à l'état monté étant formées sur la surface de serrage (F), avec des évidements (82) en forme de rainures s'étendant de manière correspondante entre celles-ci, qui présentent un fond d'évidement (83), dans lequel, en outre, à l'état monté des mâchoires de serrage (19, 20), les nervures (81) peuvent pénétrer dans les évidements (82) de la mâchoire de serrage (19, 20) opposée en fonction d'une épaisseur du câble (21) à saisir, et toutes les nervures (81) des deux mâchoires de serrage (19, 20) opposées à l'état monté présentent un renflement concave (84) sur une partie de leur extension longitudinale, le fond de l'évidement (83) étant réalisé à des profondeurs différentes sur une longueur d'un évidement (82), le fond de l'évidement (83) présentant une profondeur minimale dans la zone de l'évidement (84), **caractérisé en ce que** le fond de l'évidement (83) présente, par rapport à une section transversale longitudinale de l'évidement (82), une surélévation (86) en forme de coupole dans la zone de l'évidement (84), qui est courbée en sens inverse par rapport à un bord de l'évidement (84) associé, vu en coupe transversale, avec une hauteur (n) au-dessus d'un niveau de la zone du fond de l'évidement (83) qui se raccorde à l'élévation (86), laquelle hauteur (n) correspond à un tiers à un cinquième d'une profondeur maximale (f) de l'évidement (82).

2. Mâchoire de serrage selon la revendication 1, **caractérisée en ce qu'**une profondeur maximale (f) de l'évidement (82) correspond à un tiers à cinq tiers de la distance libre (g) entre deux nervures (81) au niveau de leur surface de nervure (85).

3. Mâchoire de serrage selon l'une des revendications précédentes, **caractérisée en ce qu'**un prolongement de fixation (76) est formé en forme de plaque, avec un plan de plaque s'étendant dans le sens d'extension d'une nervure (81).

4. Mâchoire de serrage selon la revendication 3, **caractérisée en ce que** le prolongement de fixation (76) présente un trou oblong (79), avec une plus grande longueur perpendiculaire à la direction d'extension d'une nervure (81), dans laquelle, de préférence, le trou oblong (79) est traversé par une vis de fixation (78), pour la fixation par vis de la mâchoire de serrage (19, 20) à partir d'une face frontale (80) d'une mâchoire de pince (2, 3).

5. Pince à dénuder (1) comportant deux mâchoires extérieures (19, 20), deux mâchoires intérieures (22, 23) avec des tranchants (24, 25) et deux parties de préhension (4, 5), **caractérisée par** des mâchoires (19, 20) selon l'une des revendications 1 à 4.

6. Pince à dénuder selon la revendication 5, **caractérisée en ce que** les lames (24, 25) présentent à leurs extrémités libres, se terminant par une pointe de lame (69) avec un angle aigu en section transversale, une ligne de contour (70) qui présente un enfoncement (71) par rapport à une vue latérale dans laquelle la ligne de contour (70) forme la ligne de terminaison de la lame (24, 25), **en ce que** la ligne de contour (70) est formée sur une lame (24, 25) d'une seule pièce l'enfoncement (71) apparaît en vue latérale comme une ligne à courbure continue qui peut présenter un premier rayon, **en ce qu'**une ligne de contour se raccorde des deux côtés à l'enfoncement (71) en prolongeant l'enrobage d'un câble (21) inséré, ligne de contour qui se prolonge dans une direction de coupe (b) d'un plan de coupe (E) en direction de la direction de coupe (b) et du plan de coupe (E) et qui présente une deuxième courbure plus faible que la première courbure.

7. Pince à dénuder selon la revendication 6, **caractérisée en ce qu'**une section droite de la ligne de contour se raccorde directement des deux côtés à la deuxième courbure, **en ce que** les deux sections droites s'étendent conformément à une droite commune et forment avec l'enfoncement la ligne de contour de la lame dans son ensemble.

8. Pince à dénuder selon l'une quelconque des revendications 5 à 7, **caractérisée en ce que** la courbure plus faible suit une ligne circulaire ayant un deuxième rayon.

9. Pince à dénuder selon l'une des revendications 5 à 8, **caractérisée en ce que** la première courbure ou la deuxième courbure est suivie d'une section rectiligne (73) de la ligne de contour (70).
